# EUROPÄISCHE PATENTSCHRIFT

(11) **EP 2 729 277 B1**
(45) Veröffentlichungstag und Bekanntmachung des Hinweises auf die Patenterteilung: **19.08.2020**
(21) Anmeldenummer: 12726771.4
(22) Anmeldetag: 29.05.2012
(51) Int. Cl.: B23K 35/26, B23K 35/40, B23K 1/00, H01R 43/02, H05B 3/84, H05B 3/86

(54) **VERFAHREN ZUR HERSTELLUNG EINER SCHEIBE MIT EINEM ELEKTRISCHEN ANSCHLUSSELEMENT**
METHOD FOR PRODUCING A PANE WITH AN ELECTRICAL CONNECTION ELEMENT
PROCÉDÉ DE FABRICATION DÝUN DISQUE DOTÉ D'UN ÉLÉMENT DE RACCORDEMENT ÉLECTRIQUE

(30) Priorität: 04.07.2011 EP 11172484
(43) Veröffentlichungstag der Anmeldung: 14.05.2014
(73) Patentinhaber: SAINT-GOBAIN GLASS FRANCE, 92400 Courbevoie (FR)
(72) Erfinder: SCHLARB, Andreas, 52134 Herzogenrath (DE); REUL, Bernhard, 52134 Herzogenrath (DE); RATEICZAK, Mitja, 52146 Würselen (DE); LESMEISTER, Lothar, NL-6373 Landgraaf (NL)
(74) Vertreter: Gebauer, Dieter Edmund
(86) Internationale Anmeldenummer: PCT/EP2012/059950
(87) Internationale Veröffentlichungsnummer: WO 2013/004434

(56) Entgegenhaltungen:
- EP-A1- 2 339 894
- EP-A1- 2 365 730
- EP-A2- 1 508 941
- WO-A1-2004/068643
- DE-A1- 4 207 419
- DE-B3-102004 057 630
- DE-U1- 29 722 028
- JP-A- 2009 105 293

## Beschreibung

Die Erfindung betrifft ein wirtschaftliches und umweltfreundliches Verfahren zur Herstellung einer Scheibe mit einem elektrischen Anschlusselement, ein elektrisches Anschlusselement und die Verwendung der Scheibe.

Die Erfindung betrifft weiter ein Verfahren zur Herstellung einer Scheibe mit einem elektrischen Anschlusselement für Fahrzeuge mit elektrisch leitfähigen Strukturen wie beispielsweise Heizleiter oder Antennenleiter. Die elektrisch leitfähigen Strukturen werden üblicherweise über angelötete elektrische Anschlusselemente mit der Bordelektrik verbunden. Aufgrund unterschiedlicher thermischer Ausdehnungskoeffizienten der verwendeten Materialien treten mechanische Spannungen bei der Herstellung und im Betrieb auf, welche die Scheiben belasten und den Bruch der Scheibe hervorrufen können.

Bleihaltige Lote weisen eine hohe Duktilität auf, die auftretende mechanische Spannungen zwischen elektrischem Anschlusselement und der Scheibe durch plastische Deformierung kompensieren können. Außerdem ermöglicht die hohe Duktilität das Formen der bleihaltigen Lotmasse um eine Flussmittelseele vor dem Lötvorgang. Allerdings müssen aufgrund der Altauto-Richtlinie 2000/53/EG innerhalb der EG bleihaltige Lote durch bleifreie Lote ersetzt werden. Die Richtlinie wird zusammenfassend mit dem Kürzel ELV (End of life vehicles) bezeichnet. Das Ziel ist dabei, im Zuge der massiven Ausweitung von Wegwerfelektronik äußerst problematische Bestandteile aus den Produkten zu verbannen. Die betroffenen Substanzen sind Blei, Quecksilber und Cadmium. Das betrifft unter anderem die Durchsetzung von bleifreien Lötmitteln in elektrischen Anwendungen auf Glas und die Einführung entsprechender Ersatzprodukte hierzu.

EP 1 942 703 A2 offenbart ein elektrisches Anschlusselement an Scheiben von Fahrzeugen, wobei die Differenz der thermischen Ausdehnungskoeffizienten von Scheibe und elektrischem Anschlusselement < 5 x 10⁻⁶/°C beträgt und das Anschlusselement überwiegend Titan enthält. Um eine ausreichende mechanische Stabilität und Prozessierbarkeit zu ermöglichen wird vorgeschlagen, einen Lotmassenüberschuss zu verwenden. Der Überschuss an Lotmasse tritt aus dem Zwischenraum zwischen dem Anschlusselement und elektrisch leitfähiger Struktur heraus. Der Überschuss an Lotmasse verursacht hohe mechanische Spannungen in der Glasscheibe. Diese mechanischen Spannungen führen schließlich zum Bruch der Scheibe.

Zum Löten wird der Lotmasse ein Flussmittel zugegeben. Das Flussmittel entfernt an den zu verbindenden Oberflächen aufliegende Oxide durch chemische Reaktionen und verhindert eine erneute Oxidbildung während des Lötvorgangs. Außerdem verringert das Flussmittel die Oberflächenspannung des flüssigen Lotes. Bleihaltige Lote können aufgrund ihrer hohen Duktilität um einen Strang des Flussmittels angeordnet werden. Lotmasse und Flussmittel können gemeinsam portioniert werden. Die Flussmittelseele ist vor Oxidation durch Luftsauerstoff geschützt. Außerdem kann das Flussmittel beim Transport der Lotmasse nicht verloren gehen.

Viele bleifreie Lote können nicht um eine Flussmittelseele angeordnet werden. Beispielsweise sind viele Bismut-haltige Lote zu spröde und viele Indium-haltige Lote zu weich und können deshalb nicht um eine Flussmittelseele geformt werden. Nach dem Stand der Technik wird das Flussmittel in diesem Fall vor dem Lötvorgang auf die Oberfläche der Lotmasse aufgebracht. Damit ist das Flussmittel nicht vor Einflüssen der Atmosphäre geschützt und kann beim Transport der Lotmasse, beispielsweise durch Abreibung, verloren gehen. Die Menge an Flussmittel, die auf die Lotmasse aufgebracht werden kann, ist zudem begrenzt.

Aus DE 29722028 U1 ist ein elektrisches Anschlusselement bekannt, welches mit einer vorportionierten Lotmasse versehen ist. Im Inneren der Lotmasseportion ist ein Flussmittel angeordnet. Eine solche Lotmasseportion mit Flussmitteldepot im Inneren erfordert aufwändige Herstellungsverfahren. Zudem ergeben sich bei vielen bleifreien Lotmassen aufgrund ihrer Sprödigkeit oder Weichheit die gleichen Probleme wie beim Formen der Lotmasse um eine herkömmliche Flussmittelseele. Aus EP 1508941 A2 ist eine hülsenartig geformte Lotmasse bekannt, wobei im Inneren des Hülsenmantels ein Flussmittel angeordnet ist. In DE 102004057630 B3 wird ein bleifreies Lotdepot mit integriertem Flussmittel erwähnt. Es wird allerdings nicht beschrieben ist, auf welche Art das Flussmittel vorteilhaft zu integrieren ist. Außerdem, JP-A-2009 105293 offenbart einen Lötring, wobei die Lötmasse Aussparungen auf die Oberfläche mit Flussmittel aufweist.

Eine Aufgabe der vorliegenden Erfindung ist es, ein wirtschaftliches und umweltfreundliches Verfahren zur Herstellung einer Scheibe mit einem elektrischen Anschlusselement bereitzustellen, wobei kritische mechanische Spannungen in der Scheibe vermieden werden und der Verlust des Flussmittels beim Transport der Lotmasse verhindert wird.

Eine weitere Aufgabe der vorliegenden Erfindung ist es, ein elektrisches Anschlusselement bereitzustellen, das mit einer Scheibe verbunden werden kann, wobei kritische mechanische Spannungen in der Scheibe vermieden werden.

Die Aufgabe der vorliegenden Erfindung wird erfindungsgemäß durch ein Verfahren gemäß dem unabhängigen Anspruch 1 sowie durch ein Anschlusselement gemäß dem unabhängigen Anspruch 4 gelöst. Bevorzugte Ausführungen gehen aus den Unteransprüchen hervor.

Das erfindungsgemäße Verfahren zur Herstellung einer Scheibe mit mindestens einem elektrischen Anschlusselement umfasst die folgenden Verfahrensschritte:
a) Lotmasse wird auf mindestens eine Kontaktfläche des Anschlusselements aufgebracht, wobei die Lotmasse mindestens eine Aussparung mit einem Flussmittel aufweist,
b) das Anschlusselement wird über die Lotmasse auf einem Bereich einer elektrisch leitfähigen Struktur auf einem Substrat angeordnet und
c) das Anschlusselement wird mit der elektrisch leitfähigen Struktur mittels der Lotmasse unter Wärmeeintrag verbunden.

Die Lotmasse ist als Plättchen geformt. Die Lotmasse weist dabei zwei einander gegenüberliegende Kontaktseiten auf, wobei die Lotmasse über eine der beiden Kontaktseiten mit der Kontaktfläche des Anschlusselements verbunden ist. Über die andere Kontaktseite wird die Lotmasse mit der elektrisch leitfähigen Struktur auf dem Substrat in Kontakt gebracht. Die erste Kontaktseite ist bevorzugt plan ausgeformt oder weist zumindest einen plan ausgeformten Teilbereich auf. Über einen Teilbereich der zweiten Kontaktseite ist die Aussparung in die Lotmasse eingebracht. Die Aussparung ist also oberflächlich in die Lotmasse eingebracht und somit als Vertiefung in der zweiten Kontaktseite der Lotmasse ausgeführt. Der Teilbereich der zweiten Kontaktseite, über den keine Aussparung in die Lotmasse eingebracht ist, ist bevorzugt plan ausgeformt. Die Lotmasse kann über die erste oder über die zweite Kontaktseite mit der Kontaktfläche des Anschlusselements verbunden sein.

Es können auch mehrere Aussparungen über mehrere Teilbereiche der zweiten Kontaktseite in die Lotmasse eingebracht sein. Dadurch kann das Flussmittel vorteilhaft über die Lotmasse verteilt werden. Die Lotmasse kann beispielsweise von 2 bis 10 Aussparungen aufweisen.

Die Kontaktseiten der Lotmasse können beispielsweise als Reckeck, als Oval, als Ellipse, als Kreis, als Rechteck mit abgerundeten Ecken oder als Rechteck mit zwei an gegenüberliegenden Seiten angeordneten Halbkreisen ausgeformt sein. Bevorzugt weisen die Kontaktseiten die gleiche Form wie die Kontaktfläche des Anschlusselements auf. Die Länge und die Breite jeder Kontaktseiten der Lotmasse sind bevorzugt kleiner oder gleich der Länge und der Breite der Kontaktfläche des Anschlusselements. Die Länge und die Breite der Kontaktseiten der Lotmasse sind besonders bevorzugt um 0,1 mm bis 3 mm, ganz besonders bevorzugt um 0,5 mm bis 1 mm kleiner als die Länge und die Breite der Kontaktfläche des Anschlusselements. Die Schichtdicke der Lotmasse zwischen den beiden Kontaktseiten beträgt bevorzugt von 0,1 mm bis 0,5 mm, besonders bevorzugt von 0,2 mm bis 0,4 mm und ganz besonders bevorzugt von 0,3 mm bis 0,4 mm.

Der Teilbereich der zweiten Kontaktseite der Lotmasse, über welche die Aussparung in die Lotmasse eingebracht ist, kann in der Ebene der Kontaktseite vollständig vom planen Teilbereich der Kontaktseite umgeben sein. Die Länge und Breite des Teilbereichs beträgt bevorzugt von 0,1 mm und 23 mm, besonders bevorzugt von 0,2 mm bis 7 mm.

In einer alternativen Ausführungsform der Erfindung verläuft der Teilbereich der zweiten Kontaktseite, über welchen die Aussparung in die Lotmasse eingebracht ist, von einer Kante der Kontaktseite zur gegenüberliegenden Kante der Kontaktseite. Der Teilbereich der zweiten Kontaktseite der Lotmasse, über welchen die Aussparung in die Lotmasse eingebracht ist, kann beispielsweise als Rechteck, als Oval, als Ellipse, als Kreis oder Kombinationen davon ausgeformt sein.

Jede Aussparung kann im Querschnitt senkrecht zu den Kontaktseiten der Lotmasse die Form mindestens eines Rechtecks aufweisen. In einer bevorzugten Ausführung der Erfindung weist jede Aussparung im Querschnitt senkrecht zu den Kontaktseiten der Lotmasse die Form mindestens eines Trapezes, eines Dreiecks, eines Segment eines Ovals, eines Segment einer Ellipse oder eines Kreissegmentes auf. Dabei wird die Querschnittsfläche jeder Aussparung parallel zu der Kontaktseite der Lotmasse, über welche die Aussparung eingebracht ist, mit wachsendem Abstand zu dieser Kontaktseite kleiner. Das ist besonders vorteilhaft in Bezug auf die Stabilität der Lotmasse in den Randbereichen des Plättchens.

Alternativ wird die Querschnittsfläche jeder Aussparung parallel zu der Kontaktseite der Lotmasse, über welche die Aussparung eingebracht ist, mit wachsendem Abstand zu dieser Kontaktseite größer. Das ist besonders vorteilhaft in Bezug auf die Stabilität des Flussmittels in der Aussparung. Das Flussmittel kann weniger leicht aus der Aussparung herausfallen.

Die Tiefe der Aussparung beträgt bevorzugt von 0,02 mm bis 0,3 mm, besonders bevorzugt von 0,05 mm bis 0,25 mm. In einer vorteilhaften Ausführung der Erfindung sind mehrere Aussparungen in die Lotmasse eingebracht, wobei die Aussparungen zumindest teilweise unterschiedliche Tiefen aufweisen. Die Tiefe einer Aussparung ist dabei umso größer, je größer der geringste Abstand der Aussparung von einer Kante der Kontaktseite der Lotmasse ist. Das ist besonders vorteilhaft in Bezug auf die Stabilität der Lotmasse in den Randbereichen des Plättchens.

Die Aussparung wird bevorzugt durch Walzen in die Lotmasse eingebracht. Alternativ wird die Aussparung bevorzugt durch Eindrücken, besonders bevorzugt Einprägen, oder durch Fräsen in die Lotmasse eingebracht.

Im erfindungsgemäßen Verfahren wird ein elektrisches Anschlusselement mit mindestens einer Kontaktfläche bereitgestellt, wobei Lotmasse auf der Kontaktfläche angeordnet ist, in der Lotmasse mindestens eine Aussparung angeordnet ist und zumindest in der Aussparung ein Flussmittel angeordnet ist.

In einer bevorzugten Ausführung des erfindungsgemäßen Verfahrens wird dazu die Lotmasse zunächst als Plättchen mit zwei Kontaktseiten, mindestens einer Aussparung, festgelegter Schichtdicke und Volumen geformt. Besonders bevorzugt wird die Lotmasse zwischen zwei Walzen zu einem Band gewalzt, wobei die Oberfläche einer Walze strukturiert gestaltet ist, so dass in eine der zu den Walzen hingewandten Oberflächen der Lotmasse mindestens eine Aussparung eingebracht wird. Die Plättchen der Lotmasse werden aus dem Band mit der Aussparung durch beispielsweise Schneiden oder Stanzen erhalten.

Alternativ kann die Lotmasse zu einem Band mit plan ausgeformten zu den Walzen hingewandten Oberflächen gewalzt werden und die Plättchen der Lotmasse aus dem Band geschnitten oder gestanzt werden. Die Aussparung wird danach in die Lotmasse eingebracht, bevorzugt eingedrückt, besonders bevorzugt eingeprägt. Das Flussmittel wird auf die Kontaktseite der Lotmasse, über welche die Aussparung eingebracht ist, aufgebracht, wobei das Flussmittel zumindest in der Aussparung angeordnet wird. Dabei wird die Aussparung ganz oder teilweise mit dem Flussmittel gefüllt. Die Lotmasse wird danach über eine der beiden Kontaktseiten auf der Kontaktfläche des Anschlusselements angeordnet.

In einer alternativen bevorzugten Ausführung des erfindungsgemäßen Verfahrens wird die Lotmasse zunächst als Plättchen mit zwei Kontaktseiten, mindestens einer Aussparung, festgelegter Schichtdicke und Volumen geformt. Die Lotmasse wird danach über die Kontaktseite, über welche die Aussparung nicht in die Lotmasse eingebracht ist, auf der Kontaktfläche des Anschlusselements angeordnet. Das Flussmittel wird danach auf die Kontaktseite der Lotmasse, über welche die Aussparung eingebracht ist, aufgebracht, wobei das Flussmittel zumindest in der Aussparung angeordnet wird.

In einer alternativen bevorzugten Ausführung des erfindungsgemäßen Verfahrens wird die Lotmasse zunächst als Plättchen mit zwei Kontaktseiten, mindestens einer Aussparung, festgelegter Schichtdicke und Volumen geformt und dabei das Flussmittel zumindest in der Aussparung angeordnet. Besonders bevorzugt wird die Lotmasse zwischen zwei Walzen zu einem Band gewalzt, wobei die Oberfläche einer Walze strukturiert gestaltet ist, so dass in eine der zu den Walzen hingewandten Oberflächen der Lotmasse mindestens eine Aussparung eingebracht wird. Das Flussmittel wird auf die Oberfläche der Lotmasse, über welche die Aussparung eingebracht ist, aufgebracht, wobei das Flussmittel zumindest in der Aussparung angeordnet wird. Danach werden die Plättchen der Lotmasse aus dem Band mit der Aussparung durch beispielsweise Schneiden oder Stanzen erhalten. Die Lotmasse mit dem Flussmittel wird danach auf der Kontaktfläche des Anschlusselements angeordnet.

In einer alternativen bevorzugten Ausführung des erfindungsgemäßen Verfahrens wird die Lotmasse zunächst als Plättchen mit zwei Kontaktseiten, festgelegter Schichtdicke und Volumen geformt. Besonders bevorzugt wird die Lotmasse zwischen zwei Walzen zu einem Band gewalzt, wobei die zu den Walzen hingewandten Oberflächen der Lotmasse plan ausgeformt werden. Die Plättchen der Lotmasse werden aus dem Band durch beispielsweise Schneiden oder Stanzen erhalten. Die Lotmasse wird danach auf der Kontaktfläche des Anschlusselements angeordnet und mindestens eine Aussparung danach in die von der Kontaktfläche abgewandte Kontaktseite der Lotmasse eingebracht, bevorzugt eingeprägt. Das Flussmittel wird danach auf die Kontaktseite der Lotmasse, über welche die Aussparung eingebracht ist, aufgebracht, wobei das Flussmittel zumindest in der Aussparung angeordnet wird.

In einer alternativen bevorzugten Ausführung des erfindungsgemäßen Verfahrens wird die Lotmasse zunächst als Plättchen mit zwei Kontaktseiten, festgelegter Schichtdicke und Volumen geformt. Die Lotmasse wird danach auf der Kontaktfläche des Anschlusselements angeordnet und gleichzeitig mindestens eine Aussparung in die von der Kontaktfläche abgewandte Kontaktseite der Lotmasse eingebracht. Besonders bevorzugt wird die Lotmasse mit einem Prägestempel an die Kontaktfläche angepresst. Das Flussmittel wird danach auf die Kontaktseite der Lotmasse, über welche die Aussparung eingebracht ist, aufgebracht, wobei das Flussmittel zumindest in der Aussparung angeordnet wird.

Mehrere Anschlusselemente können beim Aufbringen der Lotmasse kettenartig miteinander verbunden sein. Die einzelnen Anschlusselemente werden nach dem Aufbringen der Lotmasse aus der Kette herausgetrennt. Die Aussparung kann vor dem Aufbringen der Lotmasse auf die miteinander verbundenen Anschlusselemente in die Lotmasse eingebracht werden. Alternativ kann die Aussparung nach dem Aufbringen der Lotmasse auf die miteinander verbundenen Anschlusselemente oder nach dem Heraustrennen der einzelnen Anschlusselemente aus der Kette in die Lotmasse eingebracht werden.

Der Vorteil der Erfindung ergibt sich daraus, dass das Flussmittel zumindest in der Aussparung der Lotmasse angeordnet wird. Die Aussparung dient somit als Flussmitteldepot. Dort ist das Flussmittel vor Verlust durch beispielsweise Abreiben während des Transports des Anschlusselements geschützt. Außerdem wird durch die Aussparung die Oberfläche der Lotmasse vergrößert. Dadurch kann eine größere Menge an Flussmittel auf der Lotmasse angeordnet werden.

Die Lotmasse kann durch Anpressen auf die Kontaktfläche des Anschlusselements oder durch punktuelles Löten auf die Kontaktfläche des Anschlusselements aufgebracht werden.

In einer alternativen Ausführung der Erfindung ist im Bereich der Kontaktfläche mindestens eine Vertiefung in das Anschlusselement eingebracht. Die Querschnittsfläche der Vertiefung parallel zur Kontaktfläche vergrößert sich zumindest in einem Teilbereich der Vertiefung mit wachsendem Abstand von der Kontaktfläche. Die Vertiefungen haben bevorzugt eine Tiefe von 0,05 mm bis 0,5 mm, besonders bevorzugt von 0,1 bis 0,3 mm. An der ersten Kontaktseite der Lotmasse ist mindestens eine Ausbuchtung angeordnet. Die Querschnittsform und Querschnittsfläche ist so gewählt, dass die Ausbuchtung vollständig durch die minimale Querschnittsfläche der Vertiefung des Anschlusselements in die Vertiefung eingeführt werden kann. Die Höhe der Ausbuchtung ist größer als die Tiefe der Vertiefung. Bevorzugt ist die Höhe der Ausbuchtung von 0,1 mm bis 0,7 mm, besonders bevorzugt von 0,15 mm bis 0,5 mm. Das Volumen der Ausbuchtung ist kleiner oder gleich dem Volumen der Vertiefung. Die Ausbuchtung kann beispielsweise als Quader, als Würfel, als Zylinder, als Pyramide, als Segment eines Rotationsellipsoiden oder als Kugelsegment ausgeformt sind. Zum Verbinden wird die Lotmasse über die erste Kontaktseite an die Kontaktfläche des Anschlusselementes angepresst, wobei die Ausbuchtung der Lotmasse in der Vertiefung des Anschlusselements positioniert wird. Beim Anpressen der Lotmasse verformt sich die Ausbuchtung in der Vertiefung, so dass die maximale Querschnittsfläche der Ausbuchtung größer ist als die minimale Querschnittsfläche der Vertiefung. Dadurch ist die Verbindung der Lotmasse mit dem Anschlusselement dauerhaft stabil. Vor dem Verbinden des Anschlusselements mit der Lotmasse kann in der Vertiefung des Anschlusselements ein Flussmittel angeordnet werden.

In einer alternativen Ausführung der Erfindung weist zumindest ein Teilbereich der Kontaktfläche des Anschlusselements ein Sägezahnprofil auf. Bevorzugt ist der Teilbereich der Kontaktfläche in Form von zwei oder mehr Reihen mit Sägezahnprofil ausgestaltet, wobei zwei benachbarte Reihen eine gegenläufige Richtung des Sägezahnprofils aufweisen. Durch das Anpressen der Lotmasse an die Kontaktfläche wird die Lotmasse über die Kontaktseite in dem Sägezahnprofil der Kontaktfläche verkantet. Dadurch ist die Verbindung der Lotmasse mit dem Anschlusselement dauerhaft stabil. Vor dem Verbinden des Anschlusselements mit der Lotmasse kann auf dem Sägezahnprofil des Anschlusselements ein Flussmittel angeordnet werden.

In einer vorteilhaften Ausführung der Erfindung wird das Anschlusselement über eine Kontaktfläche vollflächig mit einem Teilbereich der elektrisch leitfähigen Struktur verbunden. Die Form der Kontaktfläche weist dabei bevorzugt keine Ecken auf. Das ist besonders vorteilhaft im Hinblick auf die Minimierung kritischer Zugspannungen in der Scheibe. Die Kontaktfläche kann beispielsweise eine ovale, bevorzugt eine elliptische und insbesondere eine kreisförmige Struktur aufweisen. Alternativ kann die Kontaktfläche eine konvexe polygonale Form, bevorzugt rechteckige Form, mit abgerundeten Ecken aufweisen, wobei die abgerundeten Ecken einen Krümmungsradius von r > 0.5 mm, bevorzugt von r > 1 mm aufweisen. Alternativ kann die Kontaktfläche als Rechteck mit zwei an gegenüberliegenden Seiten angeordneten Halbkreisen ausgeformt sein.

In einer weiteren vorteilhaften Ausführung der Erfindung wird das Anschlusselement über zwei Kontaktflächen mit Teilbereichen der elektrisch leitfähigen Struktur verbunden, wobei die Kontaktflächen über eine Brücke miteinander verbunden sind. Jede Kontaktfläche kann beispielsweise rechteckig ausgeformt sein. Alternativ kann die Form jeder der beiden Kontaktflächen mindestens ein Segment eines Ovals, einer Ellipse oder eines Kreises mit einem Mittelpunktswinkel von 90° bis 360°, bevorzugt von 140° bis 360° aufweisen, beispielsweise von 180° bis 330° oder von 200° bis 330°. Jede Kontaktfläche kann eine ovale, bevorzugt eine elliptische Struktur aufweisen. Besonders bevorzugt ist jede Kontaktfläche als Kreis ausgeformt. Alternativ ist jede Kontaktfläche als Kreissegment mit einem Mittelpunktswinkel von mindestens 180°, bevorzugt mindestens 200°, besonders bevorzugt mindestens 220°, und ganz besonders bevorzugt mindestens 230° ausgeformt. Das Kreissegment kann beispielsweise einen Mittelpunktswinkel von 180° bis 350°, bevorzugt von 200° bis 330°, besonders bevorzugt von 210° bis 310° aufweisen.

In einer weiteren vorteilhaften Ausgestaltung des erfindungsgemäßen Anschlusselements ist jede Kontaktfläche als Rechteck mit zwei an gegenüberliegenden Seiten angeordneten Halbovalen, bevorzugt Halbellipsen, besonders bevorzugt Halbkreisen ausgestaltet.

Das Anschlusselement ist in der Draufsicht beispielsweise bevorzugt 1 mm bis 50 mm lang und breit und besonders bevorzugt 2 mm bis 30 mm lang und breit und ganz besonders bevorzugt 2 mm bis 8 mm breit und 10 mm bis 24 mm lang.

Zwei durch eine Brücke miteinander verbundene Kontaktflächen sind beispielsweise bevorzugt 1 mm bis 15 mm lang und breit und besonders bevorzugt 2 mm bis 8 mm lang und breit.

Die Brücke zwischen den Kontaktflächen ist bevorzugt abschnittsweise plan ausgeformt. Plan bedeutet, dass die Unterseite des Anschlusselements eine Ebene bildet. Der Winkel zwischen der Oberfläche des Substrats und der Unterseite jedes direkt an eine Kontaktfläche angrenzenden planen Abschnitts der Brücke ist kleiner oder gleich 90°, bevorzugt zwischen 1° und 85° und besonders bevorzugt zwischen 3° und 60°. Die Brücke ist dabei so ausgeformt, dass jeder an eine Kontaktfläche angrenzende plane Abschnitt in die der unmittelbar angrenzenden Kontaktfläche abgewandte Richtung geneigt ist. Die Brücke kann auch gekrümmt sein. Die Brücke kann dabei eine einzige Krümmungsrichtung haben und das Profil eines ovalen Bogens, bevorzugt das Profil eines Ellipsenbogens und besonders bevorzugt das Profil eines Kreisbogens haben. Der Krümmungsradius des Kreisbogens beträgt beispielsweise bevorzugt von 5 mm bis 15 mm bei einer Länge des Anschlusselements von 24 mm. Die Krümmungsrichtung der Brücke kann sich auch ändern. Die Brücke muss keine konstante Breite aufweisen.

Die Lotmasse ist bevorzugt bleifrei, enthält also kein Blei. Das ist besonders vorteilhaft im Hinblick auf die Umweltverträglichkeit der erfindungsgemäßen Scheibe mit elektrischem Anschlusselement. Bleifrei Lotmassen können häufig nicht um eine Flussmittelseele geformt werden, wie dies bei bleihaltigen Lotmassen üblichen ist. Die erfindungsgemäßen Aussparungen in der Lotmasse zur Aufnahme des Flussmittels sind daher bei bleifreien Lotmassen besonders vorteilhaft. Die erfindungsgemäße Lotmasse enthält bevorzugt Zinn und Wismut, Indium, Zink, Kupfer, Silber oder Zusammensetzungen davon. Der Anteil an Zinn in der erfindungsgemäßen Lotzusammensetzung beträgt von 3 Gew.-% bis 99,5 Gew.-%, bevorzugt von 10 Gew.-% bis 95,5 Gew.-%, besonders bevorzugt von 15 Gew.-% bis 60 Gew.-%. Der Anteil an Wismut, Indium, Zink, Kupfer, Silber oder Zusammensetzungen davon beträgt in der erfindungsgemäßen Lotzusammensetzung von 0,5 Gew.-% bis 97 Gew.-%, bevorzugt 10 Gew.-% bis 67 Gew.-%, wobei der jeweilige Anteil an Wismut, Indium, Zink, Kupfer oder Silber 0 Gew.-% betragen kann. Die erfindungsgemäße Lotzusammensetzung kann Nickel, Germanium, Aluminium oder Phosphor mit einem Anteil von 0 Gew.-% bis 5 Gew.-% enthalten. Die erfindungsgemäße Lotzusammensetzung enthält ganz besonders bevorzugt Bi40Sn57Ag3, Sn40Bi57Ag3, Bi59Sn40Ag1, Bi57Sn42Ag1, In97Ag3, Sn95,5Ag3,8Cu0,7, Bi67In33, Bi33In50Sn17, Sn77,2In20Ag2,8, Sn95Ag4Cu1, Sn99Cu1, Sn96,5Ag3,5 oder Gemische davon.

Das erfindungsgemäße Flussmittel ist beim Aufbringen auf die Lotmasse bevorzugt in einem Lösungsmittel gelöst. Die Lösung des Flussmittels enthält bevorzugt zumindest 50 Gew.-% bis 95 Gew.-% Lösungsmittel, bevorzugt Alkohol, besonders bevorzugt Propan-2-ol oder Ethanol, 0 Gew.-% bis 30 Gew.-% Kolophonium, 0 Gew.-% bis 5 Gew.-% Dicarbonsäuren, 0 Gew.-% bis 8 Gew.-% Terpene, bevorzugt Orangenterpene, und 0 Gew.-% bis 7 Gew.-% Lösungsmittelnaphta. Die Lösung des Flussmittels kann weitere Additive, beispielsweise Alkohole, Harze und / oder Halogenide, enthalten. Nach dem Aufbringen auf die Lotmasse wird das Lösungsmittel bevorzugt durch Verdampfen entfernt. Der Anteil an Flussmittel an der Gesamtheit von Lotmasse und Flussmittel beträgt von 0,1 Gew.-% bis 5 Gew.-%, bevorzugt von 0,3 Gew.-% bis 4 Gew.-% und besonders bevorzugt von 0,5 Gew.-% bis 3 Gew.-%.

Die erfindungsgemäße Schichtdicke des Lots nach dem Lötvorgang ist bevorzugt < 3.0 x 10⁻⁴m. Die Lotmasse tritt nach dem Lötvorgang mit einer Austrittsbreite von < 1 mm aus dem Zwischenraum zwischen dem Anschlusselement und der elektrisch leitfähigen Struktur aus. In einer bevorzugten Ausgestaltung ist die maximale Austrittsbreite bevorzugt kleiner 0,5 mm und insbesondere etwa 0 mm. Das ist besonders vorteilhaft im Hinblick auf die Reduzierung von mechanischen Spannungen in der Scheibe, die Haftung des Anschlusselements und die Einsparung des Lots.

Die maximale Austrittsbreite ist definiert als der Abstand zwischen den Außenkanten des Anschlusselementes und der Stelle des Lotmasseübertritts, an dem die Lotmasse eine Schichtdicke von 50 µm unterschreitet. Die maximale Austrittsbreite wird nach dem Lötvorgang an der erstarrten Lotmasse gemessen.

Eine gewünschte maximale Austrittsbreite wird durch eine geeignete Wahl von Lotmassenvolumen und lotrechtem Abstand zwischen Anschlusselement und elektrisch leitfähiger Struktur erreicht, was durch einfache Versuche ermittelt werden kann. Der lotrechte Abstand zwischen Anschlusselement und elektrisch leitfähiger Struktur kann durch ein entsprechendes Prozesswerkzeug, beispielsweise ein Werkzeug mit einem integrierten Abstandshalter, vorgegeben werden.

Die maximale Austrittsbreite kann auch negativ sein, also in den von elektrischem Anschlusselement und elektrisch leitfähiger Struktur gebildeten Zwischenraum zurückgezogen sein.

In einer vorteilhaften Ausgestaltung der Erfindung ist die maximale Austrittsbreite in dem vom elektrischen Anschlusselement und der elektrisch leitfähigen Struktur gebildeten Zwischenraum in einem konkaven Meniskus zurückgezogen. Ein konkaver Meniskus entsteht beispielsweise durch Erhöhen des lotrechten Abstands zwischen Abstandshalter und leitfähiger Struktur beim Lötvorgang, während das Lot noch flüssig ist.

Das Substrat enthält bevorzugt Glas, besonders bevorzugt Flachglas, Floatglas, Quarzglas, Borosilikatglas, Kalk-Natron-Glas. In einer alternativen bevorzugten Ausgestaltung enthält das Substrat Polymere, besonders bevorzugt Polyethylen, Polypropylen, Polycarbonat, Polymethylmethacrylat und / oder Gemische davon.

Das Substrat weist einen ersten thermischen Ausdehnungskoeffizienten auf. Der erste thermische Ausdehnungskoeffizient ist bevorzugt von 8 x 10⁻⁶/°C bis 9 x 10⁻⁶/°C. Das Substrat enthält bevorzugt Glas, das bevorzugt einen thermischen Ausdehnungskoeffizienten von 8,3 x 10⁻⁶/°C bis 9 x 10⁻⁶/°C in einem Temperaturbereich von 0 °C bis 300 °C aufweist.

Die Aufgabe der Erfindung wird weiter durch ein elektrisches Anschlusselement mit mindestens einer Kontaktfläche gelöst, wobei
- Lotmasse auf der Kontaktfläche angeordnet ist,
- in der Lotmasse mindestens eine Aussparung angeordnet ist und
- zumindest in der Aussparung ein Flussmittel angeordnet ist.

Die Aussparung ist dabei ganz oder teilweise mit Flussmittel gefüllt.

Im Bereich der Kontaktfläche kann eine oder mehrere Vertiefungen in das Anschlusselement eingebracht sein. Die Vertiefungen können ganz oder teilweise mit Flussmittel gefüllt sein.

Das erfindungsgemäße Anschlusselement enthält bevorzugt zumindest eine Eisen-Nickel-Legierung, eine Eisen-Nickel-Kobalt-Legierung oder eine Eisen-Chrom-Legierung.

Das erfindungsgemäße Anschlusselement enthält bevorzugt zumindest 50 Gew.-% bis 89,5 Gew.-% Eisen, 0 Gew.-% bis 50 Gew.-% Nickel, 0 Gew.-% bis 20 Gew.-% Chrom, 0 Gew.-% bis 20 Gew.-% Kobalt, 0 Gew.-% bis 1,5 Gew.-% Magnesium, 0 Gew.-% bis 1 Gew.-% Silizium, 0 Gew.-% bis 1 Gew.-% Kohlenstoff, 0 Gew.-% bis 2 Gew.-% Mangan, 0 Gew.-% bis 5 Gew.-% Molybdän, 0 Gew.-% bis 1 Gew.-% Titan, 0 Gew.-% bis 1 Gew.-% Niob, 0 Gew.-% bis 1 Gew.-% Vanadium, 0 Gew.-% bis 1 Gew.-% Aluminium und / oder 0 Gew.-% bis 1 Gew.-% Wolfram.

Das Anschlusselement weist einen zweiten thermischen Ausdehnungskoeffizienten auf. In einer vorteilhaften Ausgestaltung der Erfindung ist die Differenz zwischen dem ersten und dem zweiten Ausdehnungskoeffizienten ≥ 5 x 10⁻⁶/°C. Der zweite thermische Ausdehnungskoeffizient ist dabei bevorzugt von 0,1 x 10⁻⁶/°C bis 4 x 10⁻⁶/°C, besonders bevorzugt von 0,3 x 10⁻⁶/°C bis 3 x 10⁻⁶/°C in einem Temperaturbereich von 0 °C bis 300 °C.

Das erfindungsgemäße Anschlusselement enthält bevorzugt zumindest 50 Gew.-% bis 75 Gew.-% Eisen, 25 Gew.-% bis 50 Gew.-% Nickel, 0 Gew.-% bis 20 Gew.-% Kobalt, 0 Gew.-% bis 1,5 Gew.-% Magnesium, 0 Gew.-% bis 1 Gew.-% Silizium, 0 Gew.-% bis 1 Gew.-% Kohlenstoff und / oder 0 Gew.-% bis 1 Gew.-% Mangan. Das erfindungsgemäße Anschlusselement enthält bevorzugt Chrom, Niob, Aluminium, Vanadium, Wolfram und Titan mit einem Anteil von 0 Gew.-% bis 1 Gew.-%, Molybdän mit einem Anteil von 0 Gew.-% bis 5 Gew.-% sowie herstellungsbedingte Beimengungen. Der besondere Vorteil liegt in der Vermeidung kritischer Zugspannungen im Substrat. Außerdem sind die elektrische Leitfähigkeit und die Lötbarkeit vorteilhaft.

Das erfindungsgemäße Anschlusselement enthält bevorzugt zumindest 55 Gew.-% bis 70 Gew.-% Eisen, 30 Gew.-% bis 45 Gew.-% Nickel, 0 Gew.-% bis 5 Gew.-% Kobalt, 0 Gew.-% bis 1 Gew.-% Magnesium, 0 Gew.-% bis 1 Gew.-% Silizium und / oder 0 Gew.-% bis 1 Gew.-% Kohlenstoff. Das ist besonders vorteilhaft im Hinblick auf die Lötbarkeit, die elektrische Leitfähigkeit und die Verringerung von Zugspannungen im Substrat.

Das erfindungsgemäße Anschlusselement enthält bevorzugt Invar (FeNi). Invar ist eine Eisen-Nickel-Legierung mit einem Gehalt von beispielsweise 36 Gew.-% Nickel (FeNi36). Es ist eine Gruppe von Legierungen und Verbindungen, welche die Eigenschaft aufweisen, in bestimmten Temperaturbereichen anomal kleine oder zum Teil negative Wärmeausdehnungskoeffizienten zu haben. Fe65Ni35 Invar enthält 65 Gew.-% Eisen und 35 Gew.-% Nickel. Bis zu 1 Gew.-% Magnesium, Silizium und Kohlenstoff werden üblicherweise legiert, um die mechanischen Eigenschaften zu verändern. Durch Legieren von 5 Gew.-% Kobalt kann der thermische Ausdehnungskoeffizient weiter reduziert werden. Eine Bezeichnung für die Legierung ist Inovco, FeNi33Co4.5 mit einem Ausdehnungskoeffizienten (20 °C bis 100 °C) von 0,55 x 10⁻⁶/°C.

Wird eine Legierung wie Invar mit einem sehr geringen absoluten thermischen Ausdehnungskoeffizienten von < 4 x 10⁻⁶/°C verwendet, findet eine Überkompensation der mechanischen Spannungen durch unkritische Druckspannungen im Glas oder durch unkritische Zugspannungen in der Legierung statt.

In einer weiteren vorteilhaften Ausgestaltung der Erfindung ist die Differenz zwischen dem ersten und dem zweiten Ausdehnungskoeffizienten < 5 x 10⁻⁶/°C. Durch die geringe Differenz zwischen dem ersten und dem zweiten thermischen Ausdehnungskoeffizienten werden kritische mechanische Spannungen in der Scheibe vermieden und eine bessere Haftung erhalten. Der zweite thermische Ausdehnungskoeffizient ist dabei bevorzugt von 4 x 10⁻⁶/°C bis 8 x 10⁻⁶/°C, besonders bevorzugt von 4 x 10⁻⁶/°C bis 6 x 10⁻⁶/°C in einem Temperaturbereich von 0 °C bis 300 °C.

Das erfindungsgemäße Anschlusselement enthält bevorzugt zumindest 50 Gew.-% bis 60 Gew.-% Eisen, 25 Gew.-% bis 35 Gew.-% Nickel, 15 Gew.-% bis 20 Gew.-% Kobalt, 0 Gew.-% bis 0,5 Gew.-% Silizium, 0 Gew.-% bis 0,1 Gew.-% Kohlenstoff und / oder 0 Gew.-% bis 0,5 Gew.-% Mangan. Der besondere Vorteil liegt in der Vermeidung mechanischer Spannungen im Substrat, der guten elektrischen Leitfähigkeit und der guten Lötbarkeit.

Das erfindungsgemäße Anschlusselement enthält bevorzugt Kovar (FeCoNi). Kovar ist eine Eisen-Nickel-Kobalt Legierung, die Wärmeausdehnungskoeffizienten von üblicherweise etwa 5 x 10⁻⁶/°C aufweist. Der Wärmeausdehnungskoeffizient ist damit geringer als der Koeffizient typischer Metalle. Die Zusammensetzung enthält beispielsweise 54 Gew.-% Eisen, 29 Gew.-% Nickel und 17 Gew.-% Kobalt.

Das erfindungsgemäße Anschlusselement enthält bevorzugt durch Glühen thermisch nachbehandelte Eisen-Nickel- und / oder Eisen-Nickel-Kobalt-Legierungen.

In einer weiteren vorteilhaften Ausgestaltung der Erfindung ist die Differenz zwischen dem ersten und dem zweiten Ausdehnungskoeffizienten ebenfalls < 5 x 10⁻⁶/°C. Der zweite thermische Ausdehnungskoeffizient ist dabei bevorzugt von 9 x 10⁻⁶/°C bis 13 x 10⁻⁶/°C, besonders bevorzugt von 10 x 10⁻⁶/°C bis 11,5 x 10⁻⁶/°C in einem Temperaturbereich von 0 °C bis 300 °C.

Das erfindungsgemäße Anschlusselement enthält bevorzugt zumindest 50 Gew.-% bis 89,5 Gew.-% Eisen, 10,5 Gew.-% bis 20 Gew.-% Chrom, 0 Gew.-% bis 1 Gew.-% Kohlenstoff, 0 Gew.-% bis 5 Gew.-% Nickel, 0 Gew.-% bis 2 Gew.-% Mangan, 0 Gew.-% bis 2,5 Gew.-% Molybdän und / oder 0 Gew.-% bis 1 Gew.-% Titan. Das Anschlusselement kann zusätzlich Beimengungen weiterer Elemente enthalten, darunter Vanadium, Aluminium, Niob und Stickstoff.

Das erfindungsgemäße Anschlusselement kann auch zumindest 66,5 Gew.-% bis 89,5 Gew.-% Eisen, 10,5 Gew.-% bis 20 Gew.-% Chrom, 0 Gew.-% bis 1 Gew.-% Kohlenstoff, 0 Gew.-% bis 5 Gew.-% Nickel, 0 Gew.-% bis 2 Gew.-% Mangan, 0 Gew.-% bis 2,5 Gew.-% Molybdän, 0 Gew.-% bis 2 Gew.-% Niob und / oder 0 Gew.-% bis 1 Gew.-% Titan enthalten.

Das erfindungsgemäße Anschlusselement enthält bevorzugt zumindest 65 Gew.-% bis 89,5 Gew.-% Eisen, 10,5 Gew.-% bis 20 Gew.-% Chrom, 0 Gew.-% bis 0,5 Gew.-% Kohlenstoff, 0 Gew.-% bis 2,5 Gew.-% Nickel, 0 Gew.-% bis 1 Gew.-% Mangan, 0 Gew.-% bis 1 Gew.-% Molybdän und / oder 0 Gew.-% bis 1 Gew.-% Titan.

Das erfindungsgemäße Anschlusselement kann auch zumindest 73 Gew.-% bis 89,5 Gew.-% Eisen, 10,5 Gew.-% bis 20 Gew.-% Chrom, 0 Gew.-% bis 0,5 Gew.-% Kohlenstoff, 0 Gew.-% bis 2,5 Gew.-% Nickel, 0 Gew.-% bis 1 Gew.-% Mangan, 0 Gew.-% bis 1 Gew.-% Molybdän, 0 Gew.-% bis 1 Gew.-% Niob und / oder 0 Gew.-% bis 1 Gew.-% Titan enthalten.

Das erfindungsgemäße Anschlusselement enthält bevorzugt zumindest 75 Gew.-% bis 84 Gew.-% Eisen, 16 Gew.-% bis 18,5 Gew.-% Chrom, 0 Gew.-% bis 0,1 Gew.-% Kohlenstoff, 0 Gew.-% bis 1 Gew.-% Mangan und / oder 0 Gew.-% bis 1 Gew.-% Titan.

Das erfindungsgemäße Anschlusselement kann auch zumindest 78,5 Gew.-% bis 84 Gew.-% Eisen, 16 Gew.-% bis 18,5 Gew.-% Chrom, 0 Gew.-% bis 0,1 Gew.-% Kohlenstoff, 0 Gew.-% bis 1 Gew.-% Mangan, 0 Gew.-% bis 1 Gew.-% Niob und / oder 0 Gew.-% bis 1 Gew.-% Titan enthalten.

Das erfindungsgemäße Anschlusselement enthält bevorzugt einen chromhaltigen Stahl mit einem Anteil an Chrom von größer oder gleich 10,5 Gew.-% und einem thermischen Ausdehnungskoeffizienten von 9 x 10⁻⁶/°C bis 13 x 10⁻⁶/°C. Weitere Legierungsbestandteile wie Molybdän, Mangan oder Niob führen zu einer verbesserten Korrosionsbeständigkeit oder veränderten mechanischen Eigenschaften, wie Zugfestigkeit oder Kaltumformbarkeit.

Der Vorteil von Anschlusselementen aus chromhaltigem Stahl gegenüber Anschlusselementen nach dem Stand der Technik aus Titan liegt in der besseren Lötbarkeit, die sich aus der höheren Wärmeleitfähigkeit des chromhaltigen Stahls ergibt. Dadurch wird eine gleichmäßigere Erwärmung des Anschlusselements während des Lötvorgangs erreicht. Es ergibt sich eine verbesserte Haftung des Anschlusselements an der Scheibe. Chromhaltiger Stahl ist zudem gut schweißbar und weist eine bessere Kaltumformbarkeit auf. Dadurch ist eine bessere Verbindung des Anschlusselements mit der Bordelektrik über ein elektrisch leitfähiges Material, beispielsweise Kupfer, durch Verschweißen oder Vercrimpen möglich. Chromhaltiger Stahl ist zudem besser verfügbar.

Auf dem Substrat wird eine elektrisch leitfähige Struktur aufgebracht, beispielsweise in einem Siebdruckverfahren. Die erfindungsgemäße elektrisch leitfähige Struktur weist eine Schichtdicke von 5 µm bis 40 µm, bevorzugt von 8 µm bis 15 µm und besonders bevorzugt von 10 µm bis 12 µm auf. Die erfindungsgemäße elektrisch leitfähige Struktur enthält bevorzugt Silber, besonders bevorzugt Silberpartikel und Glasfritten.

Das erfindungsgemäße Anschlusselement ist bevorzugt mit Nickel, Zinn, Kupfer und / oder Silber beschichtet. Das erfindungsgemäße Anschlusselement ist besonders bevorzugt mit einer haftvermittelnden Schicht, bevorzugt aus Nickel und / oder Kupfer, und zusätzlich mit einer lötbaren Benetzungsschicht, bevorzugt aus Silber, versehen. Das erfindungsgemäße Anschlusselement ist ganz besonders bevorzugt mit 0,1 µm bis 0,3 µm Nickel und / oder 3 µm bis 20 µm Silber beschichtet. Das Anschlusselement kann vernickelt, verzinnt, verkupfert und / oder versilbert werden. Nickel und Silber verbessern die Stromtragfähigkeit und Korrosionsstabilität des Anschlusselements und die Benetzung mit der Lotmasse.

Die Eisen-Nickel-Legierung, die Eisen-Nickel-Kobalt-Legierung oder die Eisen-Chrom-Legierung können auch als Ausgleichsplatte auf ein Anschlusselement aus beispielsweise einer eisenhaltigen Legierung, Aluminium, Titan oder Kupfer angeschweißt, gecrimpt oder geklebt werden. Als Bimetall kann ein günstiges Ausdehnungsverhalten des Anschlusselementes relativ zur Glasausdehnung erzielt werden. Die Ausgleichsplatte ist bevorzugt hutförmig.

Das elektrische Anschlusselement enthält auf der zur Lotmasse ausgerichteten Fläche eine Beschichtung, die Kupfer, Zink, Zinn, Silber, Gold oder Legierungen oder Schichten davon, bevorzugt Silber enthält. Dadurch wird eine Ausbreitung der Lotmasse über die Beschichtung hinweg verhindert und die Austrittsbreite begrenzt.

Die Form des elektrischen Anschlusselementes kann Lotdepots im Zwischenraum des Anschlusselements und der elektrisch leitfähigen Struktur ausbilden. Die Lotdepots und Benetzungseigenschaften des Lotes am Anschlusselement verhindern den Austritt der Lotmasse aus dem Zwischenraum. Lotdepots können rechtwinklig, verrundet oder polygonal ausgestaltet sein.

Die Verteilung der Lotwärme und damit die Verteilung der Lotmasse im Lötvorgang kann durch die Form des Anschlusselementes definiert werden. Lotmasse fließt zum wärmsten Punkt. Beispielsweise kann die das Anschlusselement eine Einfach- oder Doppelhutform aufweisen, um die Wärme während des Lötvorgangs vorteilhaft im Anschlusselement zu verteilen.

Das Einbringen der Energie beim elektrischen Verbinden von elektrischem Anschlusselement und elektrisch leitfähiger Struktur erfolgt bevorzugt mit Stempel, Thermoden, Kolbenlöten, bevorzugt Laserlöten, Heißluftlöten, Induktionslöten, Widerstandslöten und/oder mit Ultraschall.

Das Anschlusselement wird mit einem nicht dargestellten Blech, Litze, Geflecht aus beispielsweise Kupfer verschweißt oder gecrimpt und mit der ebenfalls nicht dargestellten Bordelektrik verbunden.

Das Anschlusselement wird bevorzugt in Heizscheiben oder in Scheiben mit Antennen in Gebäuden, insbesondere in Automobilen, Eisenbahnen, Flugzeugen oder Seefahrzeugen, in funktionalen und / oder dekorativen Einzelstücken benutzt. Das Anschlusselement dient dazu, die leitenden Strukturen der Scheibe mit elektrischen Systemen zu verbinden, welche außerhalb der Scheibe angeordnet sind. Die elektrischen Systeme sind Verstärker, Steuereinheiten oder Spannungsquellen.

Die nach dem erfindungsgemäßen Verfahren hergestellte Scheibe wird bevorzugt als Heizscheibe oder Scheibe mit Antennen in Gebäuden, insbesondere in Automobilen, Eisenbahnen, Flugzeugen oder Seefahrzeugen, in funktionalen und / oder dekorativen Einzelstücken oder als Einbauteil in Möbeln und Geräten benutzt.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
- Fig. 1: eine perspektivische Darstellung einer ersten Ausgestaltung der erfindungsgemäßen Scheibe mit Anschlusselement,
- Fig. 2: einen Schnitt A-A' durch das erfindungsgemäße Anschlusselement mit Lotmasse und Flussmittel vor dem Löten, daher ohne Scheibe,
- Fig. 3: einen Schnitt A-A' durch eine alternative Ausgestaltung des Anschlusselements mit Lotmasse und Flussmittel vor dem Löten, daher ohne Scheibe,
- Fig. 4: einen Schnitt A-A' durch eine alternative Ausgestaltung des Anschlusselements mit Lotmasse und Flussmittel vor dem Löten, daher ohne Scheibe,
- Fig. 4a: einen Schnitt A-A' durch eine alternative Ausgestaltung des Anschlusselements mit Lotmasse und Flussmittel vor dem Löten, daher ohne Scheibe,
- Fig. 5: einen Schnitt A-A' durch eine alternative Ausgestaltung des Anschlusselements mit Lotmasse und Flussmittel vor dem Löten, daher ohne Scheibe,
- Fig. 6: einen Schnitt A-A' durch eine alternative Ausgestaltung des Anschlusselements mit Lotmasse und Flussmittel vor dem Löten, daher ohne Scheibe,
- Fig. 7: einen Schnitt A-A' durch eine alternative Ausgestaltung des Anschlusselements mit Lotmasse und Flussmittel vor dem Löten, daher ohne Scheibe,
- Fig. 8: einen Schnitt B-B' durch das Anschlusselement mit Lotmasse und Flussmittel aus Figur 7 vor dem Löten,
- Fig. 9: eine Draufsicht auf die Unterseite des Anschlusselements gemäß Figur 2,
- Fig. 10: eine Draufsicht auf die Unterseite einer alternativen Ausgestaltung des Anschlusselements mit Lotmasse und Flussmittel vor dem Löten,
- Fig. 11: eine Draufsicht auf die Unterseite einer alternativen Ausgestaltung des Anschlusselements mit Lotmasse und Flussmittel vor dem Löten,
- Fig. 12: eine Draufsicht auf die Unterseite einer alternativen Ausgestaltung des Anschlusselements mit Lotmasse und Flussmittel vor dem Löten,
- Fig. 13: eine Draufsicht auf die Unterseite einer alternativen Ausgestaltung des Anschlusselements mit Lotmasse und Flussmittel vor dem Löten,
- Fig. 14: einen Schnitt A-A' durch eine Ausgestaltung des erfindungsgemäßen Anschlusselements vor dem Verbinden mit der Lotmasse ohne Scheibe,
- Fig. 14a: einen Schnitt A-A' durch eine alternative Ausgestaltung des erfindungsgemäßen Anschlusselements vor dem Verbinden mit der Lotmasse ohne Scheibe,
- Fig. 15: einen Schnitt A-A' gemäß Figur 14 nach dem Verbinden mit der Lotmasse ohne Scheibe,
- Fig. 16: einen Schnitt B-B' durch eine alternative Ausgestaltung des erfindungsgemäßen Anschlusselements mit Lotmasse ohne Scheibe,
- Fig. 17: einen Schnitt A-A' durch die Scheibe gemäß Figur 1,
- Fig. 18: einen Schnitt A-A' durch eine alternative erfindungsgemäße Scheibe mit Anschlusselement,
- Fig. 19: einen Schnitt A-A' durch eine weitere alternative erfindungsgemäße Scheibe mit Anschlusselement,
- Fig. 20: einen Schnitt A-A' durch eine weitere alternative erfindungsgemäße Scheibe mit Anschlusselement,
- Fig. 21: einen Schnitt A-A' durch eine weitere alternative erfindungsgemäße Scheibe mit Anschlusselement,
- Fig. 22: eine Draufsicht auf eine alternative Ausgestaltung der erfindungsgemäßen Scheibe mit Anschlusselement,
- Fig. 23: einen Schnitt C-C' durch die Scheibe gemäß Figur 22,
- Fig. 24: eine Draufsicht auf eine alternative Ausgestaltung der erfindungsgemäßen Scheibe mit Anschlusselement,
- Fig. 25: eine Draufsicht auf eine alternative Ausgestaltung der erfindungsgemäßen Scheibe mit Anschlusselement,
- Fig. 26: ein detailliertes Flussdiagramm einer Ausführungsform des erfindungsgemäßen Verfahrens,
- Fig. 27: ein detailliertes Flussdiagramm einer alternativen Ausführungsform des erfindungsgemäßen Verfahrens,

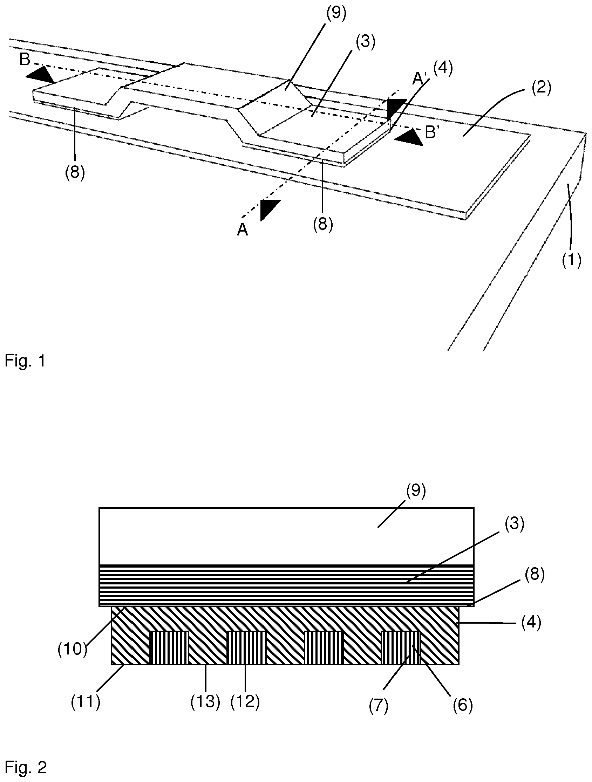

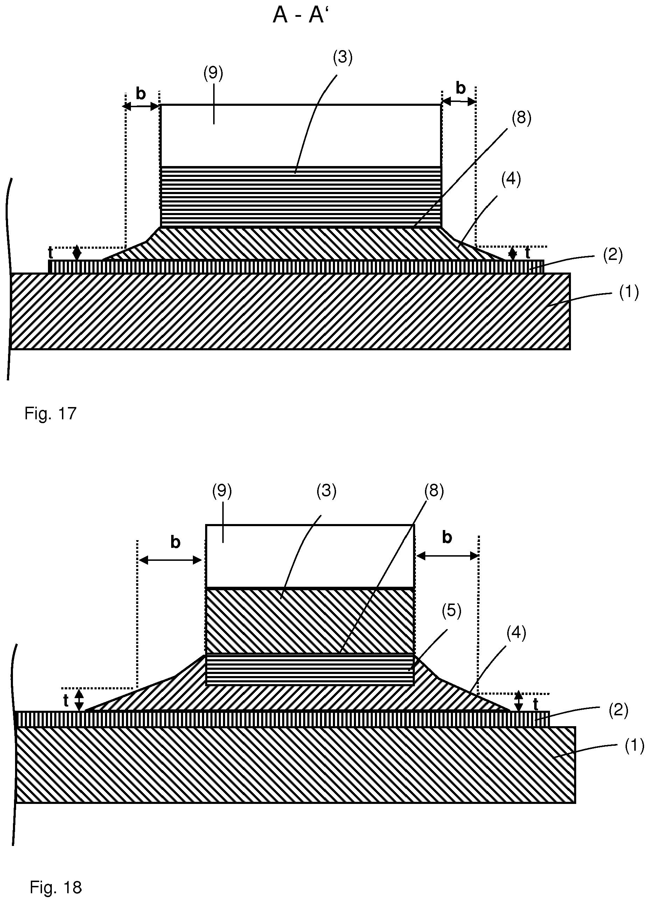

Fig. 1 und Fig. 17 zeigen je ein Detail einer erfindungsgemäßen beheizbaren Scheibe 1 im Bereich des elektrischen Anschlusselementes 3. Die Scheibe 1 ist ein 3 mm dickes thermisch vorgespanntes Einscheibensicherheitsglas aus Natron-Kalk-Glas. Die Scheibe 1 weist eine Breite von 150 cm und eine Höhe von 80 cm auf. Auf der Scheibe 1 ist eine elektrisch leitfähige Struktur 2 in Form einer Heizleiterstruktur 2 aufgedruckt. Die elektrisch leitfähige Struktur 2 enthält Silberpartikel und Glasfritten. Im Randbereich der Scheibe 1 ist die elektrisch leitfähige Struktur 2 auf eine Breite von 10 mm verbreitert und bildet eine Kontaktfläche für das elektrische Anschlusselement 3. Im Randbereich der Scheibe 1 befindet sich weiter ein nicht dargestellter Abdecksiebdruck.

Das elektrische Anschlusselement 3 ist brückenförmig ausgestaltet und hat eine Breite von 4 mm und eine Länge von 24 mm. Das elektrische Anschlusselement 3 besteht aus Stahl der Werkstoff-Nummer 1.4509 nach EN 10 088-2 (ThyssenKrupp Nirosta® 4509) mit einem thermischen Ausdehnungskoeffizienten von 10,0 x 10⁻⁶/°C. Die beiden Kontaktflächen 8 sind rechteckig ausgeformt mit einer Breite von 4 mm und einer Länge von 6 mm und über eine Brücke 9 miteinander verbunden. Die Brücke 9 besteht aus drei planen Abschnitten. Die zum Substrat 1 hingewandte Fläche jedes der beiden direkt an eine Kontaktfläche 8 angrenzenden Abschnitte der Brücke 9 schließt mit der Oberfläche des Substrats 1 einen Winkel von 40° ein. Der Vorteil liegt in der Wirkung des Kapillareffekts zwischen elektrisch leitfähiger Struktur 2 und den an die Kontaktflächen 8 angrenzenden Abschnitten der Brücke 9. Der Kapillareffekt ist eine Folge des geringen Abstands zwischen der elektrisch leitfähigen Struktur 2 und den an die Kontaktflächen 8 angrenzenden Abschnitten der Brücke 9. Der geringe Abstand ergibt sich aus dem Winkel zwischen der Oberfläche des Substrats 1 und der Unterseite jedes direkt an eine Kontaktfläche 8 angrenzenden planen Abschnitts der Brücke 9. Der gewünschte Abstand zwischen Anschlusselement und elektrisch leitfähiger Struktur wird nach dem Aufschmelzen der Lotmasse eingestellt. Überschüssige Lotmasse wird durch den Kapillareffekt kontrolliert in das von der Brücke 9 und der elektrisch leitfähigen Struktur 2 begrenzte Volumen gesaugt. Dadurch wird der Lotmasseübertritt an den Außenkanten des Anschlusselements und damit die maximale Austrittsbreite verringert. Somit wird eine Reduzierung der mechanischen Spannungen in der Scheibe erreicht.

Im Bereich der Kontaktflächen 8 zwischen dem elektrischen Anschlusselement 3 und der elektrisch leitfähigen Struktur 2 ist Lotmasse 4 aufgebracht, die eine dauerhafte elektrische und mechanische Verbindung zwischen dem elektrischen Anschlusselement 3 und der elektrisch leitfähigen Struktur 2 bewirkt. Die Lotmasse 4 enthält 57 Gew.-% Wismut, 42 Gew.-% Zinn und 1 Gew.-% Silber. Die Lotmasse 4 ist durch ein vorgegebenes Volumen und Form vollständig zwischen dem elektrischen Anschlusselement 3 und der elektrisch leitfähigen Struktur 2 angeordnet. Die Lotmasse 4 hat eine Dicke von 250 µm.

Fig. 2 zeigt ein Detail des erfindungsgemäßen Anschlusselements 3 aus Figur 1 vor dem Lötvorgang. Die Lotmasse 4 ist als Plättchen mit einer Breite von 3 mm, einer Länge von 5,5 mm und einer Dicke von 0,38 mm an jeder Kontaktfläche 8 angeordnet. Die Lotmasse 4 ist über die erste Kontaktseite 10 mit der Kontaktfläche 8 verbunden. Über die Teilbereiche 12 der zweiten Kontaktseite 11 sind vier Aussparungen 6 mit einer Breite von 0,4 mm in die Lotmasse 4 eingebracht. Die Teilbereiche 12 verlaufen parallel zueinander von einer Kante der Kontaktseite 11 zur gegenüberliegenden Kante. Die Teilbereiche 13 der Kontaktseite 11, über die keine Aussparungen 6 in die Lotmasse 4 eingebracht sind, sind plan ausgeformt. Im Querschnitt senkrecht zu den Kontaktseiten 10 und 11 weisen die Aussparungen 6 eine rechteckige Form auf. Die Aussparungen 6 haben eine Tiefe von 0,2 mm. Das Flussmittel 7 ist in den Aussparungen 6 angeordnet. Das Flussmittel 7 enthält bevorzugt Kolophonium und weitere Additive.

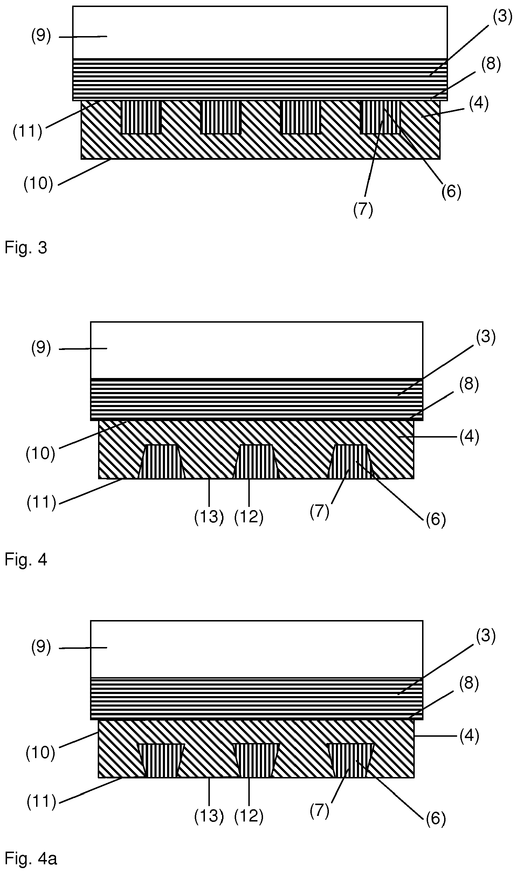

Fig. 3 zeigt eine alternative Ausgestaltung des erfindungsgemäßen Anschlusselementes 3 mit der Lotmasse 4 und dem Flussmittel 7 vor dem Lötvorgang. Die Lotmasse 4 und die Aussparungen 6 sind gemäß der Figur 2 ausgeformt. Die Lotmasse 4 ist über die zweite Kontaktseite 11, über welche die Aussparungen 6 in die Lotmasse 4 eingebracht sind, auf den Kontaktflächen 8 angeordnet. Das ist besonders vorteilhaft im Hinblick auf den Schutz des Flussmittels 7 vor Oxidation durch Luftsauerstoff.

Fig. 4 zeigt eine weitere alternative Ausgestaltung des erfindungsgemäßen Anschlusselementes 3 mit der Lotmasse 4 und dem Flussmittel 7 vor dem Lötvorgang. Die Lotmasse 4 ist über die erste Kontaktseite 10 mit der Kontaktfläche 8 verbunden. Über die Teilbereiche 12 der zweiten Kontaktseite 11 sind drei Aussparungen 6 mit einer Tiefe von 0,2 mm in die Lotmasse 4 eingebracht. Die Teilbereiche 12 verlaufen parallel zueinander von einer Kante der Kontaktseite 11 zur gegenüberliegenden Kante. Im Querschnitt senkrecht zu den Kontaktseiten 10 und 11 weisen die Aussparungen 6 die Form eines symmetrischen Trapezes auf. Die lange Grundseite des Trapezes ist an der Kontaktseite 11 angeordnet und hat eine Länge von 0,45 mm. Die kurze Seite des Trapezes hat eine Länge von 0,3 mm. Die Querschnittsfläche der Aussparungen 6 parallel zur Kontaktseite 11 wird mit wachsendem Abstand zur Kontaktseite 11 kleiner. Der Vorteil liegt in einer größeren Stabilität der Lotmasse 4 in den Randbereichen. Das Flussmittel 7 ist in den Aussparungen 6 angeordnet.

Fig. 4a zeigt eine weitere alternative Ausgestaltung des erfindungsgemäßen Anschlusselementes 3 mit der Lotmasse 4 und dem Flussmittel 7 vor dem Lötvorgang. Die Lotmasse 4 ist über die erste Kontaktseite 10 mit der Kontaktfläche 8 verbunden. Über die Teilbereiche 12 der zweiten Kontaktseite 11 sind drei Aussparungen 6 mit einer Tiefe von 0,2 mm in die Lotmasse 4 eingebracht. Die Teilbereiche 12 verlaufen parallel zueinander von einer Kante der Kontaktseite 11 zur gegenüberliegenden Kante. Im Querschnitt senkrecht zu den Kontaktseiten 10 und 11 weisen die Aussparungen 6 die Form eines symmetrischen Trapezes auf. Die kurze Grundseite des Trapezes ist an der Kontaktseite 11 angeordnet und hat eine Länge von 0,3 mm. Die lange Seite des Trapezes hat eine Länge von 0,45 mm. Die Querschnittsfläche der Aussparungen 6 parallel zur Kontaktseite 11 wird mit wachsendem Abstand zur Kontaktseite 11 größer. Dadurch wird ein Herausfallen des Flussmittels 7 aus den Aussparungen 6 vorteilhaft verhindert.

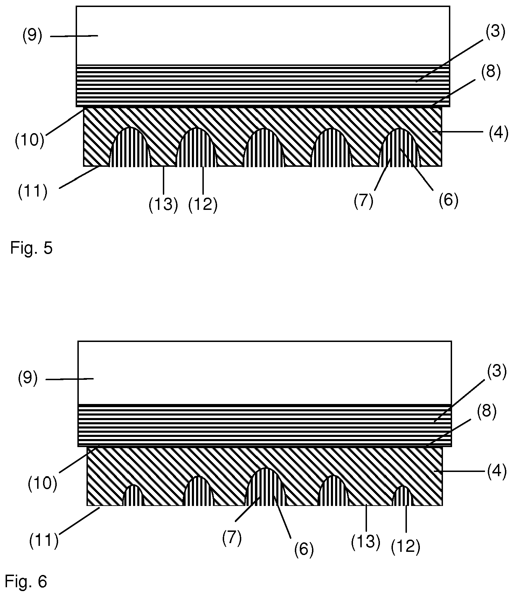

Fig. 5 zeigt eine weitere alternative Ausgestaltung des erfindungsgemäßen Anschlusselementes 3 mit der Lotmasse 4 und dem Flussmittel 7 vor dem Lötvorgang. Die Lotmasse 4 ist über die erste Kontaktseite 10 mit der Kontaktfläche 8 verbunden. Über die Teilbereiche 12 der zweiten Kontaktseite 11 sind fünf Aussparungen 6 mit einer Tiefe von 0,25 mm und einer Breite von 0,2 mm in die Lotmasse 4 eingebracht.. Die Teilbereiche 12 verlaufen parallel zueinander von einer Kante der Kontaktseite 11 zur gegenüberliegenden Kante. Im Querschnitt senkrecht zu den Kontaktseiten 10 und 11 weist jede Aussparung 6 die Form eines Ellipsensegments auf. Das Flussmittel 7 ist in den Aussparungen 6 angeordnet.

Fig. 6 zeigt eine alternative Ausgestaltung des erfindungsgemäßen Anschlusselementes 3 mit der Lotmasse 4 und dem Flussmittel 7 vor dem Lötvorgang. Die Lotmasse 4 ist über die erste Kontaktseite 10 mit der Kontaktfläche 8 verbunden. Über die Teilbereiche 12 der zweiten Kontaktseite 11 sind fünf Aussparungen 6 in die Lotmasse 4 eingebracht. Die Teilbereiche 12 verlaufen parallel zueinander von einer Kante der Kontaktseite 11 zur gegenüberliegenden Kante. Im Querschnitt senkrecht zu den Kontaktseiten 10 und 11 weist jede Aussparung 6 die Form eines Ellipsensegments auf. Die beiden Aussparungen 6 mit dem geringsten Abstand zu einer Außenkante der Lotmasse 4 haben eine Tiefe von 0,05 mm, die mittlere Aussparung hat eine Tiefe von 0,25 mm und die dazwischen liegenden Aussparungen haben eine Tiefe von 0,15 mm. Der Vorteil der unterschiedlichen Tiefen die Aussparungen 6 liegt in einer größeren Stabilität der Lotmasse 4 in den Randbereichen. Das Flussmittel 7 ist in den Aussparungen 6 angeordnet.

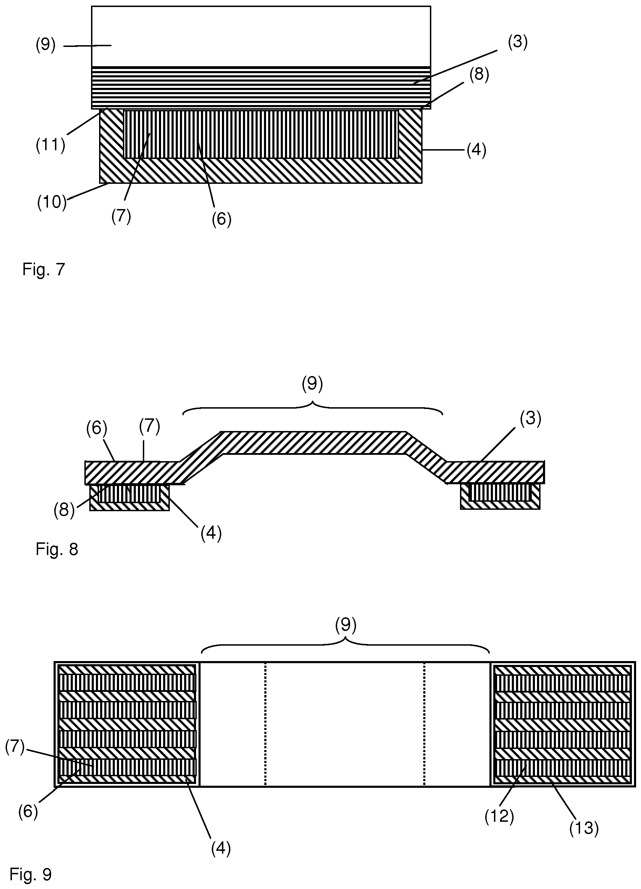

Fig. 7 und Fig. 8 zeigen je ein Detail einer alternativen Ausgestaltung des erfindungsgemäßen Anschlusselements 3 mit Lotmasse 4 und Flussmittel 7 vor dem Lötvorgang. Über einen Teilbereich 12 der zweiten Kontaktseite 11 ist eine Aussparung 6 mit einer Tiefe von 0,2 mm in die Lotmasse 4 eingebracht. Der Teilbereich 12 ist rechteckig ausgeformt mit einer Länge von 4,5 mm und einer Breite von 2 mm. Die Lotmasse 4 ist über die Kontaktseite 11 mit der Kontaktfläche 8 des Anschlusselements 3 verbunden.

Fig. 9 zeigt ein Detail des erfindungsgemäßen Anschlusselements 3 aus Figur 2 mit Lotmasse 4 und Flussmittel 7 vor dem Lötvorgang. Die Teilbereiche 12 der zweiten Kontaktseite 11, über welche die Aussparungen 6 in die Lotmasse 4 eingebracht sind, verlaufen parallel zueinander von einer Kante der Kontaktseite 11 zur gegenüberliegenden Kante. Die Breite jeder Aussparung 6 beträgt 0,4 mm.

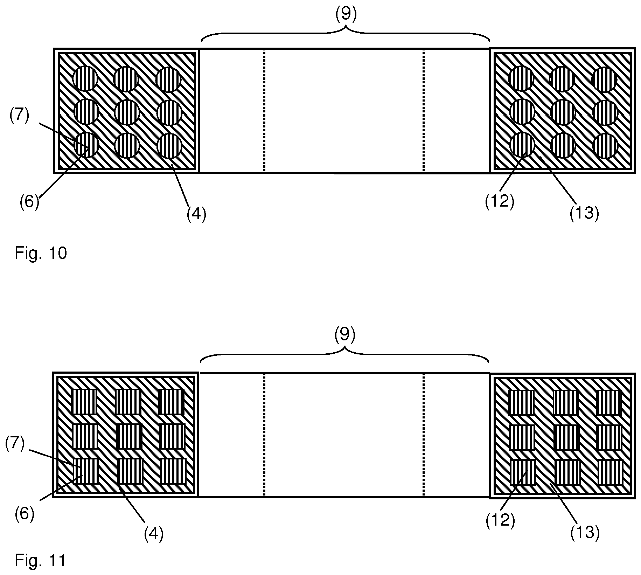

Fig. 10 zeigt eine alternative Ausgestaltung des erfindungsgemäßen Anschlusselementes 3 mit Lotmasse 4 und Flussmittel 7 vor dem Lötvorgang. Die Lotmasse 4 ist über die erste Kontaktseite 10 mit der Kontaktfläche 8 verbunden. Über die Teilbereiche 12 der zweiten Kontaktseite 11 sind neun Aussparungen 6 mit einer Tiefe von 0,2 mm in die Lotmasse 4 eingebracht. Die Teilbereiche 12 sind in der Ebene der Kontaktseite 11 vollständig vom Teilbereich 13, über den keine Aussparungen eingebracht sind, umgeben. Jeder Teilbereich 12 ist als Kreis ausformt mit einem Radius von 0,25 mm. Das Flussmittel 7 ist in den Aussparungen 6 angeordnet.

Fig. 11 zeigt eine weitere alternative Ausgestaltung des erfindungsgemäßen Anschlusselementes 3 mit Lotmasse 4 und Flussmittel 7 vor dem Lötvorgang. Die Lotmasse 4 ist über die erste Kontaktseite 10 mit der Kontaktfläche 8 verbunden. Über die Teilbereiche 12 der zweiten Kontaktseite 11 sind neun Aussparungen 6 mit einer Tiefe von 0,2 mm in die Lotmasse 4 eingebracht. Die Teilbereiche 12 sind in der Ebene der Kontaktseite 11 vollständig vom Teilbereich 13, über den keine Aussparungen eingebracht sind, umgeben. Jeder Teilbereich 12 ist rechteckig ausformt mit einer Länge und Breite von 0,5 mm. Das Flussmittel 7 ist in den Aussparungen 6 angeordnet.

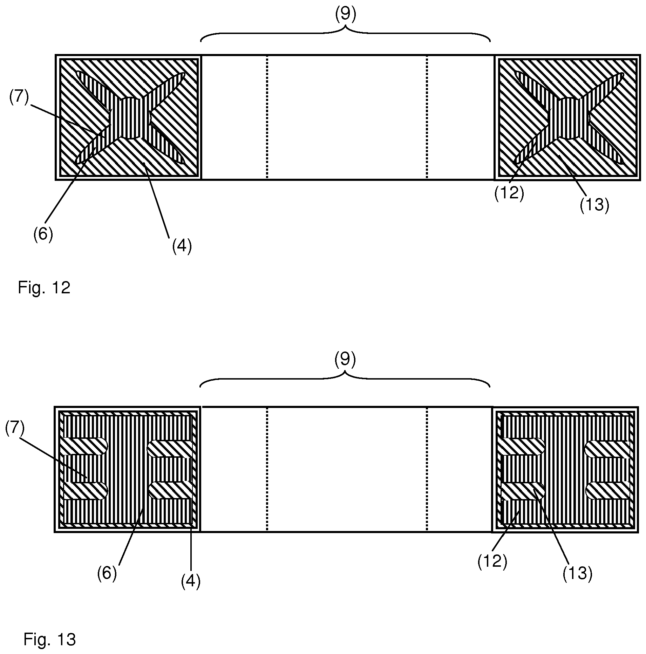

Fig. 12 zeigt eine weitere alternative Ausgestaltung des erfindungsgemäßen Anschlusselementes 3 mit Lotmasse 4 und Flussmittel 7 vor dem Lötvorgang. Über den Teilbereich 12 der zweiten Kontaktseite 11 ist eine Aussparung 6 in die Lotmasse 4 eingebracht. Der Teilbereich 12 ist in der Ebene der Kontaktseite 11 vollständig vom Teilbereich 13, über den keine Aussparungen eingebracht sind, umgeben. Der Teilbereich 12 ist als Kreis mit einem Durchmesser von 1 mm ausgeformt, wobei an dem Kreis vier Ausbuchtungen in Form von Ellipsensegmenten mit einer Länge von 2 mm angeordnet sind, die auf die Ecken der Kontaktseite 11 weisen. Durch die Form der Aussparung 6 mit dem Flussmittel 7 wird eine vorteilhafte Verteilung der Lötwärme in der Lotmasse 4 erreicht.

Fig. 13 zeigt eine weitere alternative Ausgestaltung des erfindungsgemäßen Anschlusselementes 3 mit Lotmasse 4 und Flussmittel 7 vor dem Lötvorgang. Durch die Ausbuchtungen des Teilbereichs 12, die auf die Kanten der Kontaktfläche 11 weisen, wird eine vorteilhafte Verteilung der Lötwärme in der Lotmasse 4 während des Lötvorgangs erreicht.

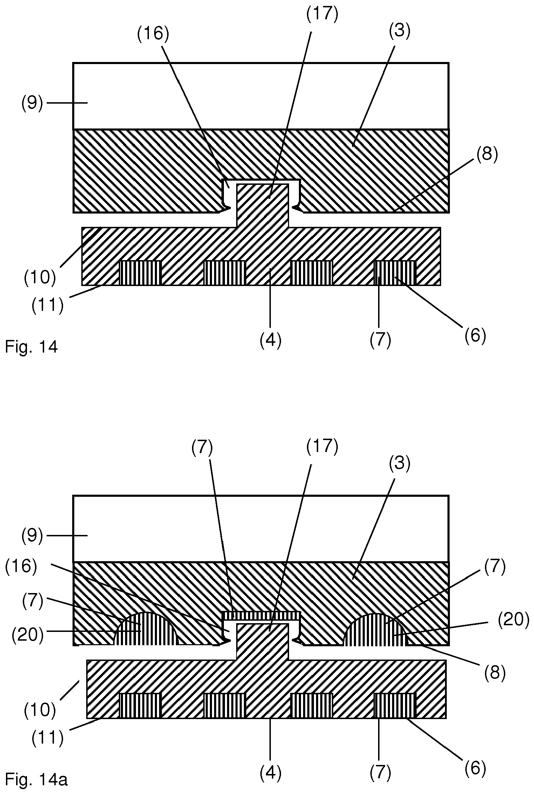

Fig. 14 zeigt einen Schnitt A-A' durch das Anschlusselement 3 und die Lotmasse 4 vor dem Verbinden in einer Ausführung des erfindungsgemäßen Verfahrens. Im Bereich der Kontaktfläche 8 ist eine Vertiefung 16 mit einer Tiefe von 0,3 mm in das Anschlusselement 3 eingebracht. Die rechteckige Querschnittsfläche der Vertiefung 16 parallel zur Kontaktfläche vergrößert sich in einem Teilbereich der Vertiefung mit wachsendem Abstand von der Kontaktfläche 8 von 0,8 mm² auf 1 mm². An der ersten Kontaktseite 10 der Lotmasse 4 ist eine Ausbuchtung 17 angeordnet. Die Ausbuchtung 17 ist als Quader mit einer Länge und Breite von 0,8 mm und einer Höhe von 0,45 mm ausgeformt. Vor dem Anpressen der Lotmasse 4 an das Anschlusselement 3 wird die Ausbuchtung 17 in der Vertiefung 16 positioniert.

Fig. 14a zeigt einen Schnitt A-A' durch das Anschlusselement 3 und die Lotmasse 4 vor dem Verbinden in einer alternativen Ausführung des erfindungsgemäßen Verfahrens. Die Vertiefung 16 des Anschlusselements 3 und die Ausbuchtung 17 der Lotmasse 4 sind wie in Figur 14 ausgeformt. In der Vertiefung 16 ist ein Flussmittel 7 angeordnet. Im Bereich der Kontaktfläche 8 sind zwei weitere Vertiefungen 20 mit einer Tiefe von 0,3 mm in das Anschlusselement 3 eingebracht. In den Vertiefungen 20 ist ebenfalls ein Flussmittel 7 angeordnet. Der Vorteil liegt in der Positionierung des Flussmittels 7 im Kontaktbereich zwischen Lotmasse 4 und Anschlusselement 3, wobei das Flussmittel 7 vor Herausfallen und Oxidation durch Luftsauerstoff geschützt ist.

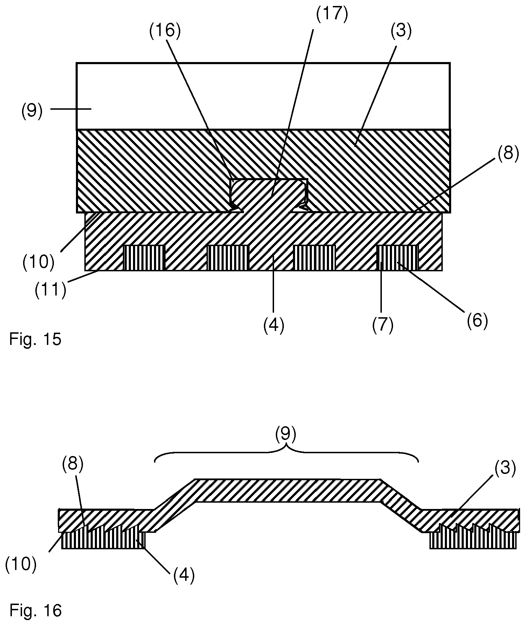

Fig. 15 zeigt einen Schnitt durch das Anschlusselement 3 und die Lotmasse 4 aus Figur 14 nach dem Verbinden durch Anpressen. Die Ausbuchtung 17 ist im Vergleich zu Figur 14 verformt. Die maximale Querschnittsfläche der Ausbuchtung 17 parallel zur Kontaktfläche 8 ist größer als die minimale Querschnittsfläche der Vertiefung 16. Dadurch ist die Verbindung der Lotmasse 4 mit dem Anschlusselement 3 dauerhaft stabil.

Fig. 16 zeigt einen Schnitt B-B' durch das Anschlusselement 3 und die Lotmasse 4 nach dem Verbinden durch Anpressen in einer alternativen Ausführung des erfindungsgemäßen Verfahrens. Ein Teilbereich der Kontaktfläche 8 weist ein Sägezahnprofil auf. Der Schnitt zeigt eine Reihe des Sägezahnprofils. Vor und hinter dem dargestellten Schnitt befindet sich jeweils eine weitere Reihe mit gegenläufigem Sägezahnprofil. Durch das Anpressen der Lotmasse 4 an die Kontaktfläche 8 ist die Lotmasse 4 über die Kontaktseite 10 in dem Sägezahnprofil verkantet. Dadurch ist die Verbindung der Lotmasse mit dem Anschlusselement dauerhaft stabil.

Fig. 17 zeigt einen Schnitt A-A' durch die erfindungsgemäße Scheibe gemäß Figur 1.

Fig. 18 zeigt in Fortführung des Ausführungsbeispiels der Figuren 1 und 17 eine alternative Ausgestaltung der erfindungsgemäßen Scheibe. Das elektrische Anschlusselement 3 ist auf der zur Lotmasse 4 hin ausgerichteten Fläche mit einer silberhaltigen Beschichtung 5 versehen. Dadurch wird eine Ausbreitung der Lotmasse über die Beschichtung 5 hinweg verhindert und die Austrittsbreite b begrenzt. In einer weiteren Ausgestaltung kann sich zwischen Anschlusselement 3 und silberhaltiger Schicht 5 eine haftvermittelnde Schicht, beispielsweise aus Nickel und / oder Kupfer, befinden. Die Austrittsbreite b der Lotmasse 4 ist unterhalb von 1 mm.

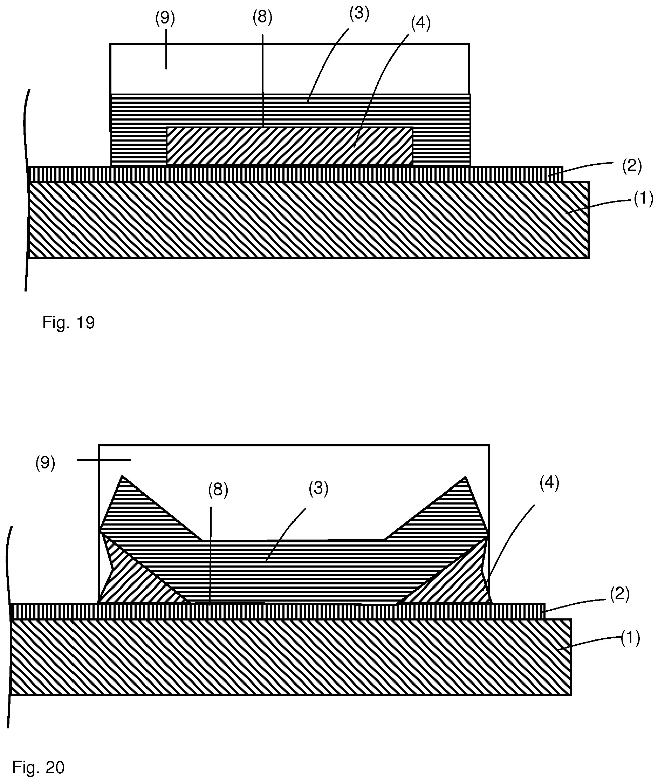

Fig. 19 zeigt in Fortführung des Ausführungsbeispiels der Figuren 1 und 17 eine weitere alternative Ausgestaltung der erfindungsgemäßen Scheibe. Das elektrische Anschlusselement 3 enthält auf der zur Lotmasse 4 hin ausgerichteten Fläche eine Aussparung mit einer Tiefe von 250 µm, die ein Lotdepot für die Lotmasse 4 bildet. Ein Austritt der Lotmasse 4 aus dem Zwischenraum kann vollständig verhindert werden.

Fig. 20 zeigt in Fortführung des Ausführungsbeispiels der Figuren 1 und 17 eine weitere alternative Ausgestaltung der erfindungsgemäßen Scheibe. Das elektrische Anschlusselement 3 ist an den Randbereichen aufgebogen. Die Höhe der Aufbiegung der Randbereiche von der Glasscheibe 1 beträgt maximal 400 µm. Dadurch wird ein Raum für die Lotmasse 4 gebildet. Die vorgegebene Lotmasse 4 bildet zwischen dem elektrischen Anschlusselement 3 und der elektrisch leitfähigen Struktur 2 einen konkaven Meniskus. Ein Austritt von Lotmasse 4 aus dem Zwischenraum kann vollständig verhindert werden. Die Austrittsbreite b ist in etwa 0, größtenteils aufgrund des gebildeten Meniskus unterhalb von null.

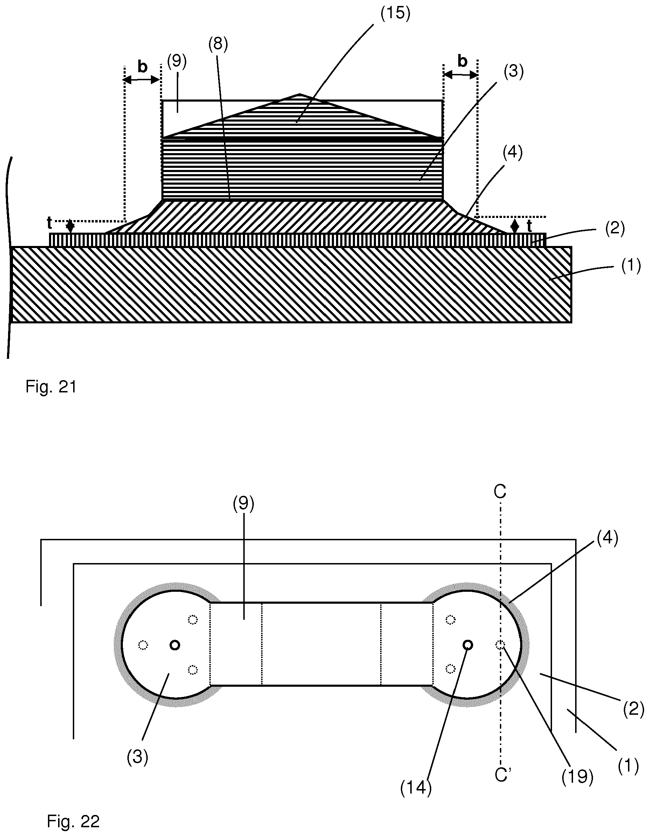

Fig. 21 zeigt eine weitere alternative Ausgestaltung der erfindungsgemäßen Scheibe mit Anschlusselements 3 in Brückenform. Das Anschlusselement 3 enthält eine eisenhaltige Legierung mit einem thermischen Ausdehnungskoeffizienten von 8 x 10⁻⁶/°C. Die Materialdicke beträgt 2 mm. Im Bereich der Kontaktflächen 8 des Anschlusselementes 3 sind hutförmige Ausgleichskörper 15 mit chromhaltigem Stahl der Werkstoff-Nummer 1.4509 nach EN 10 088-2 (ThyssenKrupp Nirosta® 4509) aufgebracht. Die maximale Schichtdicke der hutförmigen Ausgleichskörper 15 beträgt 4 mm. Durch die Ausgleichskörper können die thermischen Ausdehnungskoeffizienten des Anschlusselementes 3 den Erfordernissen der Scheibe 1 und der Lotmasse 4 angepasst werden. Die hutförmigen Ausgleichskörper 15 führen zu einem verbesserten Wärmefluss während der Herstellung der Lotverbindung 4. Die Erwärmung erfolgt vor allem im Zentrum der Kontaktflächen 8. Die Austrittsbreite b der Lotmasse 4 kann weiter reduziert werden. Aufgrund der geringen Austrittsbreite b von < 1 mm und des angepassten Ausdehnungskoeffizienten können die thermischen Spannungen in der Scheibe 1 weiter reduziert werden.

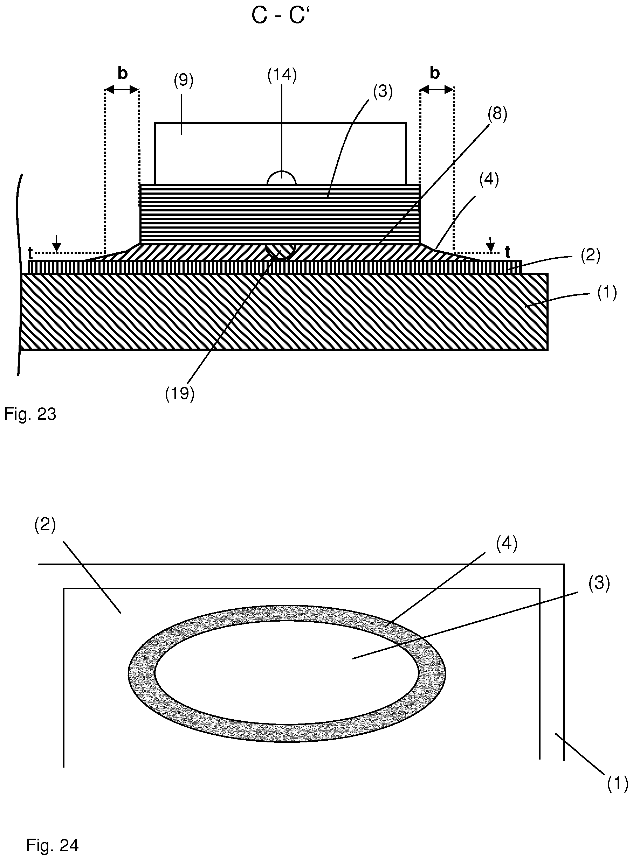

Fig. 22 und Fig. 23 zeigen je ein Detail einer weiteren alternativen Ausgestaltung der erfindungsgemäßen Scheibe mit Anschlusselements 3 in Brückenform aus Stahl der Werkstoff-Nummer 1.4509 nach EN 10 088-2 (ThyssenKrupp Nirosta® 4509). Jede Kontaktfläche 8 hat die Form eines Kreissegments mit einem Radius von 3 mm und einem Mittelpunktswinkel von 276°.

Während des Lötvorgangs erfolgt ausgehend von den Lötstellen, die an der den Kontaktflächen gegenüberliegenden Flächen des Anschlusselements angeordnet sind, die Ausbreitung einer Wärmeverteilung. Die Isothermen können für den Fall zweier Punktwärmequellen vereinfacht als konzentrische Kreise um die Lötstellen dargestellt werden. Die Form der Kontaktflächen 8 ist an die Form der Wärmeverteilung um die Lötstellen während des Lötvorgangs angenähert. Entlang der Ränder der Kontaktflächen treten deshalb während des Lötvorgangs keine oder nur geringe Temperaturunterschiede auf. Dies führt zu einem gleichmäßigen Aufschmelzen der Lotmasse im gesamten Bereich der Kontaktflächen zwischen Anschlusselement und elektrisch leitfähiger Struktur. Das ist besonders vorteilhaft im Hinblick auf die Haftung des Anschlusselements, die Verkürzung der Dauer des Lötvorgangs und die Vermeidung von mechanischen Spannungen in der Scheibe.

An der vom Substrat 1 abgewandten Fläche des Anschlusselements 3 sind zwei Kontakterhebungen 14 angeordnet. Die Kontakterhebungen 14 enthalten die gleiche Legierung wie das Anschlusselement 3. Die Mittelpunkte der Kontakterhebungen 14 sind lotrecht zur Oberfläche des Substrats oberhalb der Kreismittelpunkte der beiden Kontaktflächen 8 angeordnet. Die Kontakterhebungen 14 sind als Halbkugeln ausgeformt und haben eine Höhe von 2,5 x 10⁻⁴ m und eine Breite von 5 x 10⁻⁴ m. In alternativen Ausgestaltungen der Erfindung kann jede Kontakterhebung beispielsweise als Segment eines Rotationsellipsoids oder als Quader mit konvex gekrümmt ausgeformter, vom Substrat abgewandter Fläche ausgeformt sein. Die Kontakterhebungen können bevorzugt eine Höhe von 0,1 mm bis 2 mm, besonders bevorzugt von 0,2 mm bis 1 mm haben. Die Länge und Breite der Kontakterhebungen kann bevorzugt zwischen 0,1 und 5 mm, besonders bevorzugt zwischen 0,4 mm und 3 mm betragen. Die Kontakterhebungen können als Prägungen gestaltet sein. Während des Lötvorgangs werden die Lötelektroden mit den Kontakterhebungen 14 in Kontakt gebracht. Bevorzugt werden Lötelektroden verwendet, deren Kontaktseite flach ausgeformt ist. Der Kontaktbereich zwischen Elektrodenfläche und Kontakterhebung 14 bildet die Lötstelle. Die Position der Lötstelle wird dabei bevorzugt durch den Punkt auf der konvexen Oberfläche der Kontakterhebung bestimmt, der den größten lotrechten Abstand zur Oberfläche des Substrats aufweist. Die Position der Lötstelle ist unabhängig von der Position der Lötelektrode auf dem Anschlusselement. Das ist besonders vorteilhaft im Hinblick auf eine reproduzierbare, gleichmäßige Wärmeverteilung während des Lötvorgangs.

An jeder Kontaktfläche 8 sind drei Abstandshalter 19 angeordnet. Die Abstandshalter 19 sind als Halbkugeln ausgeformt und haben eine Höhe von 2,5 x 10⁻⁴ m und eine Breite von 5 x 10⁻⁴ m. Die Abstandshalter 19 enthalten die gleiche Legierung wie das Anschlusselement 3. In alternativen Ausgestaltungen der Erfindung können die Abstandshalter beispielsweise als Würfel, als Pyramide oder als Segment eines Rotationsellipsoids ausgeformt sein. Die Abstandshalter können bevorzugt eine Breite von 0,5 x 10⁻⁴ m bis 10 x 10⁻⁴ m und eine Höhe von 0,5 x 10⁻⁴ m bis 5 x 10⁻⁴ m, besonders bevorzugt von 1 x 10⁻⁴ m bis 3 x 10⁻⁴ m haben. Die Abstandshalter können als Prägungen gestaltet sein. Durch die Abstandshalter wird die Ausbildung einer gleichmäßigen Lotmasseschicht begünstigt. Das ist besonders vorteilhaft in Hinblick auf die Haftung des Anschlusselements.

Die Kontakterhebungen 14 und die Abstandshalter 19 können in einer vorteilhaften Ausgestaltung einstückig mit dem Anschlusselement 3 ausgebildet sein. Die Kontakterhebungen 14 und die Abstandshalter 19 können beispielsweise durch Umformen eines Anschlusselementes 3 mit im Ausgangszustand planer Oberfläche auf der Oberfläche ausgebildet werden, beispielsweise durch Prägen oder Tiefziehen. Dabei kann eine entsprechende Vertiefung auf der der Kontakterhebung 14 beziehungsweise dem Abstandshalter 19 gegenüberliegenden Oberfläche des Anschlusselements 3 erzeugt werden.

Durch die Kontakterhebungen 14 und die Abstandshalter 19 wird eine homogene, gleichmäßig dicke und gleichmäßig aufgeschmolzene Schicht der Lotmasse 4 erreicht. Dadurch können mechanische Spannungen zwischen Anschlusselement 3 und Substrat 1 verringert werden. Das ist insbesondere bei der Verwendung bleifreier Lotmassen besonders vorteilhaft, die aufgrund ihrer häufig geringeren Duktilität im Vergleich zu bleihaltigen Lotmassen mechanische Spannungen weniger gut kompensieren können.

Fig. 24 zeigt eine Draufsicht auf eine weitere alternative Ausgestaltung der erfindungsgemäßen Scheibe 1 im Bereich des elektrischen Anschlusselementes 3. Das elektrische Anschlusselement 3 ist mit einer ellipsenförmigen Grundfläche ausgestaltet. Die Länge der Hauptachse beträgt 12 mm, die Länge der Nebenachse 5 mm. Die Materialdicke des Anschlusselementes 3 beträgt 0,8 mm. Das Anschlusselement 3 ist über eine Kontaktfläche 8 vollflächig mit einem Teilbereich der elektrisch leitfähigen Struktur 2 verbunden.

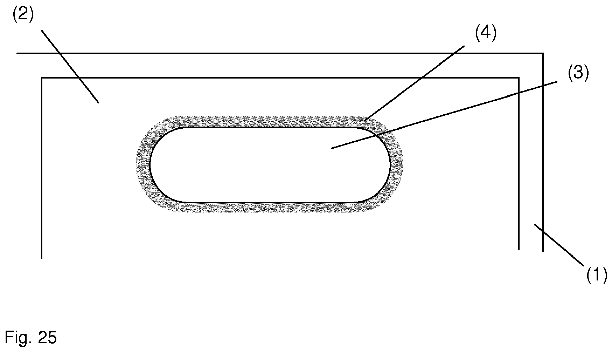

Fig. 25 zeigt eine Draufsicht auf eine weitere alternative Ausgestaltung der erfindungsgemäßen Scheibe 1 im Bereich des elektrischen Anschlusselements 3. Das Anschlusselement 3 ist rechteckförmig gestaltet, wobei die beiden kurzen Seiten des Rechtecks halbkreisförmig ausgestaltet sind. Das Anschlusselement 3 hat eine Breite von 5 mm und eine Länge von 14 mm.

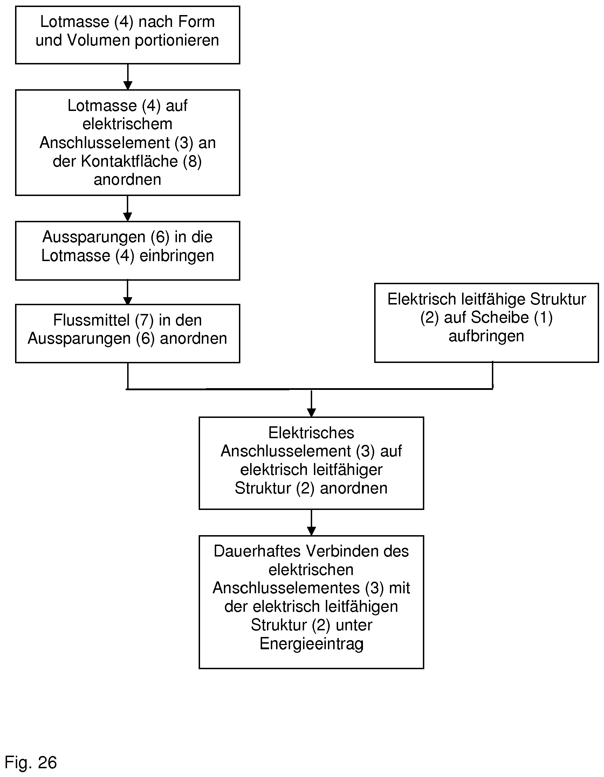

Fig. 26 zeigt detailliert ein Ausführungsbeispiel des erfindungsgemäßen Verfahrens zur Herstellung einer Scheibe 1 mit elektrischem Anschlusselement 3. Als erster Schritt wird die Lotmasse 4 nach Form und Volumen portioniert. Dabei wird die Lotmasse 4 zu einem Band mit einer Breite von 3 mm und einer Dicke von 0,38 mm und plan ausgeformten Oberflächen gewalzt. Von dem Band werden Plättchen der Lotmasse 4 mit einer Länge von 5,5 mm geschnitten. Die portionierte Lotmasse 4 wird danach über die erste Kontaktseite 10 an der Kontaktfläche 8 des elektrischen Anschlusselementes 3 angeordnet. Die Aussparungen 6 werden danach in die Lotmasse 4 über die vom Anschlusselement 3 abgewandte Kontaktseite 11 der Lotmasse 4 eingeprägt. Das Flussmittel 7 wird auf die Kontaktseite 11 aufgebracht und dabei zumindest in den Aussparungen 6 angeordnet. Das elektrische Anschlusselement 3 wird mit der Lotmasse 4 und dem Flussmittel 7 auf der elektrisch leitfähigen Struktur 2 angeordnet. Es erfolgt eine dauerhafte Verbindung des elektrischen Anschlusselementes 3 mit der elektrisch leitfähigen Struktur 2 und dadurch mit der Scheibe 1 unter Energieeintrag.

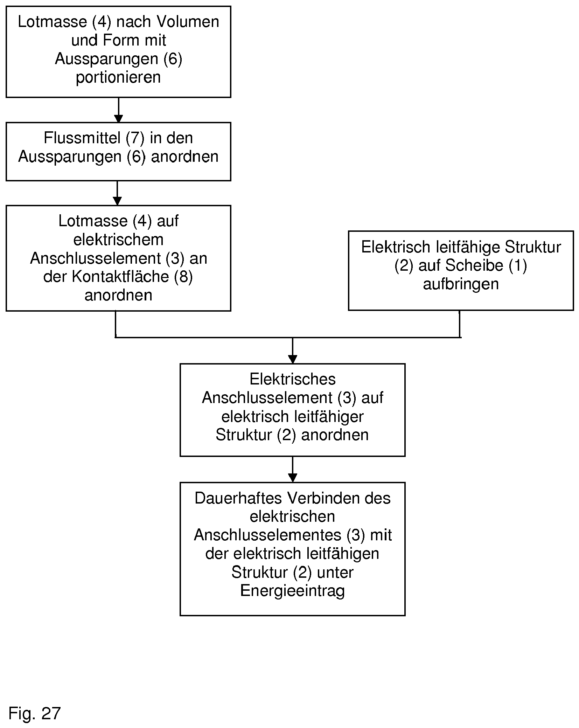

Fig. 27 zeigt detailliert ein alternatives Ausführungsbeispiel des erfindungsgemäßen Verfahrens zur Herstellung einer Scheibe 1 mit elektrischem Anschlusselement 3. Als erster Schritt wird die Lotmasse 4 nach Volumen und Form mit den Aussparungen 6 portioniert. Dabei wird die Lotmasse 4 zu einem Band mit einer Breite von 3 mm und einer Dicke von 0,38 mm gewalzt, wobei die Oberfläche einer Walze strukturiert ausgeformt ist, so dass in einer Oberfläche des Bands an Lotmasse 4 Aussparungen eingebracht werden. Von dem Band werden Plättchen der Lotmasse 4 mit einer Länge von 5,5 mm geschnitten. Das Flussmittel 7 wird danach auf die Kontaktseite 11, über welche die Aussparungen 6 in die Lotmasse 4 eingebracht sind, aufgebracht. Die portionierte Lotmasse 4 mit dem Flussmittel 7 wird danach über die Kontaktseite 10 auf die Kontaktfläche 8 des elektrischen Anschlusselementes 3 angeordnet. Alternativ kann die Lotmasse 4 über die Kontaktseite 11 auf die Kontaktfläche 8 angeordnet werden. Das elektrische Anschlusselement 3 wird mit der Lotmasse 4 und dem Flussmittel 7 auf der elektrisch leitfähigen Struktur 2 angeordnet. Es erfolgt eine dauerhafte Verbindung des elektrischen Anschlusselementes 3 mit der elektrisch leitfähigen Struktur 2 und dadurch mit der Scheibe 1 unter Energieeintrag.

In einer alternativen Ausführung wird die Lotmasse 4 zu einem Band mit plan ausgeformten Oberflächen gewalzt, zu Plättchen geschnitten und die Aussparungen 6 werden anschließend in die Kontaktseite 11 des Plättchens eingeprägt.

In einer weiteren alternativen Ausführung wird die Lotmasse 4 zu einem Band mit Aussparungen an einer Oberfläche gewalzt. Das Flussmittel 7 wird zumindest in den Aussparungen angeordnet und danach Plättchen der Lotmasse 4 mit dem Flussmittel 7 geschnitten.

### Beispiel

Testproben wurden nach dem erfindungsgemäßen Verfahren gemäß Figur 26 angefertigt mit einer Scheibe 1 (Dicke 3 mm, Breite 150 cm und Höhe 80 cm) mit elektrisch leitfähiger Struktur 2 in Form einer Heizleiterstruktur, einem elektrischen Anschlusselement 3, einer Silberschicht 5 auf den Kontaktflächen 8 des Anschlusselements 3, der Lotmasse 4 mit den Aussparungen 6 und dem Flussmittel 7. Die Materialdicke des Anschlusselementes 3 betrug 0,8 mm. Das Anschlusselement 3 enthielt Stahl der Werkstoff-Nummer 1.4509 nach EN 10 088-2 (ThyssenKrupp Nirosta® 4509). Das elektrische Anschlusselement 3, die Lotmasse 4 vor dem Lötvorgang und die Aussparungen 6 waren gemäß den Figuren 2 und 9 ausgeformt. Das Flussmittel war Stannol® 400-25. Das Flussmittel 7 enthielt Kolophonium und weitere Additive. Das Anschlusselement 3 wurde mit der Lotmasse 4 und dem Flussmittel 7 auf der elektrisch leitfähigen Struktur 2 angebracht. Das Anschlusselement 3 wurde bei einer Temperatur von 200 °C und einer Behandlungsdauer von 2 Sekunden auf die elektrisch leitfähige Struktur 2 angelötet. Ein Austritt der Lotmasse 4 aus dem Zwischenraum zwischen dem elektrischen Anschlusselement 3 und der elektrisch leitfähigen Struktur 2, die eine Schichtdicke t von 50 µm überstieg, wurde nur auf einer maximalen Austrittsbreite von b = 0,4 mm beobachtet. Die Ausmaße und Zusammensetzungen des elektrischen Anschlusselements 3, der Silberschicht 5 auf den Kontaktflächen 8 des Anschlusselements 3 und der Lotmasse 4 mit Aussparungen 6 und Flussmittel 7 gehen aus der Tabelle 1 hervor. Durch die Anordnung der Lotmasse 4, vorgegeben durch das Anschlusselement 3 und die elektrisch leitfähige Struktur 2, wurden keine kritischen mechanischen Spannungen in der Scheibe 1 beobachtet. Die Verbindung der Scheibe 1 mit dem elektrischen Anschlusselement 3 war über die elektrisch leitfähige Struktur 2 nach dem Verlöten mit der Lotmasse 4 und dem Flussmittel 7 bei allen Proben dauerhaft stabil.

Bei sämtlichen Proben konnte bei einem Temperaturunterschied von +80 °C auf -30 °C beobachtet werden, dass kein Glassubstrat 1 brach oder Schäden aufwies. Es konnte gezeigt werden, dass kurz nach dem Anlöten diese Scheiben 1 mit angelöteten Anschlusselement 3 gegen plötzlichen Temperaturabfall stabil waren.

**Tabelle 1**

| Bestandteile | Material | Beispiel |
|---|---|---|
| Anschlusselement 3 | Stahl der Werkstoff-Nummer 1.4509 nach EN 10 088-2 mit der Zusammensetzung: | |
| | Eisen (Gew.-%) | 78,87 |
| | Kohlenstoff (Gew.-%) | 0,03 |
| | Chrom (Gew.-%) | 18,5 |
| | Titan (Gew.-%) | 0,6 |
| | Niob (Gew.-%) | 1 |
| | Mangan (Gew.-%) | 1 |
| | CTE (coefficient of thermal expansion) (1 0⁻⁶/°C für 0 °C - 100 °C) | 10 |
| | Differenz zwischen CTE des Anschlusselements und des Substrats (1 0-⁶/°C für 0 °C - 100 °C) | 1,7 |
| | Dicke des Anschlusselements (m) | 8,0 x 10⁻⁴ |
| Benetzungsschicht 5 | | |
| | Silber (Gew.-%) | 100 |
| | Dicke der Schicht (m) | 7,0 x 10⁻⁶ |
| Lotmasse 4 | | |
| | Zinn (Gew.-%) | 42 |
| | Wismut (Gew.-%) | 57 |
| | Silber (Gew.-%) | 1 |
| | Masse (g) | 118 x 10⁻³ |
| Aussparungen 6 | | |
| | Tiefe (m) | 2 x 10⁻⁴ |
| Flussmittel 7 | Stannol® 400-25 | |
| | Masse (g) | 2 x 10⁻³ |
| Glas Substrat 1 | | |
| (Natron-Kalk-Glas) | | |
| | CTE (1 0⁻⁶/°C für 0 °C-320 °C) | 8,3 |

### Vergleichsbeispiel

Das Vergleichsbeispiel wurde genauso durchgeführt wie das Beispiel. Der Unterschied lag in der Ausgestaltung der Lotmasse 4 vor dem Lötvorgang. In die Lotmasse 4 waren keine Aussparungen 6 eingebracht. Dadurch war das Flussmittel nicht gegen Verluste beim Transport des Anschlusselements durch Abreiben geschützt.

Der Vergleich zwischen den Proben aus dem Beispiel und den Vergleichsproben hat gezeigt, dass bei 80 % der Proben die stabile Verbindung zwischen Anschlusselement 3 und elektrisch leitfähiger Struktur 2 verbessert wurde.

Mit dem erfindungsgemäßen Verfahren hergestellte Scheiben wiesen eine bessere Stabilität der Verbindung zwischen elektrischem Anschlusselement 3 und elektrisch leitfähiger Struktur 2 auf.

Dieses Ergebnis war für den Fachmann unerwartet und überraschend.

### Bezugszeichenliste

- (1): Scheibe
- (2): Elektrisch leitfähige Struktur
- (3): Elektrisches Anschlusselement
- (4): Lotmasse
- (5): Benetzungsschicht
- (6): Aussparung in der Lotmasse 4
- (7): Flussmittel
- (8): Kontaktfläche des Anschlusselements 3
- (9): Brücke zwischen zwei Kontaktflächen 8
- (10): Erste Kontaktseite der Lotmasse 4
- (11): Zweite Kontaktseite der Lotmasse 4
- (12): Teilbereich der Kontaktseite 11
- (13): Teilbereich der Kontaktseite 11
- (14): Kontakterhebung
- (15): Ausgleichskörper
- (16): Vertiefung des Anschlusselements 3
- (17): Ausbuchtung der Lotmasse 4
- (19): Abstandshalter
- (20): Vertiefung des Anschlusselements 3

- b: maximale Austrittsbreite der Lotmasse
- t: Grenzdicke der Lotmasse

- A-A': Schnittlinie
- B-B': Schnittlinie
- C-C': Schnittlinie

## Patentansprüche

1. Verfahren zur Herstellung einer Scheibe mit mindestens einem elektrischen Anschlusselement (3), wobei
a. Lotmasse (4) auf mindestens eine Kontaktfläche (8) des Anschlusselements (3) aufgebracht wird und die Lotmasse (4) mindestens eine Aussparung (6) mit einem Flussmittel (7) aufweist, b. das Anschlusselement (3) über die Lotmasse (4) auf einem Bereich einer elektrisch leitfähigen Struktur (2) auf einem Substrat (1) angeordnet wird, wobei die Lotmasse (4) als Plättchen geformt und zwei gegenüberliegende Seiten (10, 11) aufweist, wobei die Lotmasse (4) über eine der beiden Kontaktseiten (10) mit der Kontaktfläche (8) des Anschlusselements (3) verbunden ist und über die andere Kontaktseite (11) mit der elektrisch leitfähigen Struktur auf dem Substrat in Kontakt gebracht wird, und
c. das Anschlusselement (3) mit der elektrisch leitfähigen Struktur (2) mittels der Lotmasse (4) unter Wärmeeintrag verbunden wird, wobei
in Verfahrensschritt (a) zunächst die Lotmasse (4) mit mindestens einer Aussparung (6) geformt wird, das Flussmittel (7) danach zumindest in der Aussparung (6) angeordnet wird und die Lotmasse (4) danach auf der Kontaktfläche (8) des Anschlusselements (3) angeordnet wird, oder
in Verfahrensschritt (a) zunächst die Lotmasse (4) geformt wird, die Lotmasse (4) danach auf der Kontaktfläche (8) des Anschlusselements (3) angeordnet wird, mindestens eine Aussparung (6) danach in die von der Kontaktfläche (8) abgewandte Fläche der Lotmasse (4) eingebracht wird und das Flussmittel (7) danach zumindest in der Aussparung (6) angeordnet wird.

2. Verfahren nach Anspruch 1, wobei der Teilbereich (12) der Kontaktseite (11), über den die Aussparung (6) in die Lotmasse (4) eingebracht ist, als Rechteck, als Oval, als Ellipse, als Kreis oder Kombinationen davon ausgeformt ist.

3. Verfahren nach einem der Ansprüche 1 bis 2, wobei das Flussmittel (7) als Lösung auf die Lotmasse (4) aufgebracht wird und die Lösung des Flussmittels (7) zumindest 50 Gew.-% bis 95 Gew.-% Lösungsmittel, bevorzugt Alkohol, besonders bevorzugt Propan-2-ol oder Ethanol, 0 Gew.-% bis 30 Gew.-% Kolophonium, 0 Gew.-% bis 5 Gew.-% Dicarbonsäuren, 0 Gew.-% bis 8 Gew.-% Terpene, bevorzugt Orangenterpene, und 0 Gew.-% bis 7 Gew.-% Lösungsmittelnaphta enthält.

4. Elektrisches Anschlusselement (3) mit mindestens einer Kontaktfläche (8), wobei
i. Lotmasse (4) auf der Kontaktfläche (8) angeordnet ist,
ii. in der Lotmasse (4) mindestens eine Aussparung (6) angeordnet ist und
iii. zumindest in der Aussparung (6) ein Flussmittel (7) angeordnet ist, wobei die Aussparung oberflächlich in die Lotmasse eingebracht ist
wobei die Lotmasse (4) als Plättchen geformt und zwei gegenüberliegende Seiten (10, 11) aufweist, wobei die Lotmasse (4) über eine der beiden Kontaktseiten (10) mit der Kontaktfläche (8) des Anschlusselements (3) verbunden ist und über die andere Kontaktseite (11) mit der elektrisch leitfähigen Struktur auf dem Substrat in Kontakt ist.

5. Anschlusselement nach Anspruch 4, wobei das Anschlusselement (3) zumindest eine Eisen-Nickel-Legierung, eine Eisen-Nickel-Kobalt-Legierung oder eine Eisen-Chrom-Legierung enthält.

6. Anschlusselement nach Anspruch 5, wobei das Anschlusselement (3) zumindest 50 Gew.-% bis 75 Gew.-% Eisen, 25 Gew.-% bis 50 Gew.-% Nickel, 0 Gew.-% bis 20 Gew.-% Kobalt, 0 Gew.-% bis 1,5 Gew.-% Magnesium, 0 Gew.-% bis 1 Gew.-% Silizium, 0 Gew.-% bis 1 Gew.-% Kohlenstoff oder 0 Gew.-% bis 1 Gew.-% Mangan enthält.

7. Anschlusselement nach Anspruch 5, wobei das Anschlusselement (3) zumindest 50 Gew.-% bis 89,5 Gew.-% Eisen, 10,5 Gew.-% bis 20 Gew.-% Chrom, 0 Gew.-% bis 1 Gew.-% Kohlenstoff, 0 Gew.-% bis 5 Gew.-% Nickel, 0 Gew.-% bis 2 Gew.-% Mangan, 0 Gew.-% bis 2,5 Gew.-% Molybdän oder 0 Gew.-% bis 1 Gew.-% Titan enthält.

8. Anschlusselement nach einem der Ansprüche 4 bis 7, wobei die Lotmasse (4) Zinn und Wismut, Indium, Zink, Kupfer, Silber oder Zusammensetzungen davon enthält und der Anteil an Zinn in der Lotzusammensetzung (4) bevorzugt 3 Gew.-% bis 99,5 Gew.-% beträgt und der Anteil von Wismut, Indium, Zink, Kupfer, Silber oder Zusammensetzungen davon bevorzugt 0,5 Gew.-% bis 97 Gew.-% beträgt.

9. Anschlusselement nach einem der Ansprüche 4 bis 8, wobei das Anschlusselement (3) mit Nickel, Zinn, Kupfer und / oder Silber beschichtet ist, bevorzugt mit 0,1 µm bis 0,3 µm Nickel und / oder 3 µm bis 20 µm Silber.

10. Anschlusselement nach einem der Ansprüche 4 bis 9, wobei der Anteil an Flussmittel an der Gesamtheit von Lotmasse und Flussmittel von 0,1 Gew.-% bis 5 Gew.-%, bevorzugt von 0,3 Gew.-% bis 4 Gew.-% und besonders bevorzugt von 0,5 Gew.-% bis 3 Gew.-% beträgt.

11. Anschlusselement nach einem der Ansprüche 4 bis 10, wobei die Aussparung (6) teilweise oder ganz mit dem Flussmittel (7) gefüllt ist.

12. Anschlusselement nach einem der Ansprüche 4 bis 11, wobei ein Flussmittel (7) in mindestens einer Vertiefung (16,20) im Bereich der Kontaktfläche (8) des Anschlusselements (3) angeordnet ist.

13. Verwendung eines Anschlusselementes (3) nach einem der Ansprüche 4 bis 12 zur Kontaktierung von elektrisch leitfähigen Strukturen, bevorzugt Heizleitern und/oder Antennenleitern, auf einer Scheibe in Fortbewegungsmitteln für den Verkehr auf dem Lande, in der Luft oder zu Wasser, insbesondere in Kraftfahrzeugen, in Gebäuden, in funktionalen und / oder dekorativen Einzelstücken.

## Claims

1. Method of producing a pane with at least one electrical connection element (3), wherein
a) solder material (4) is applied to at least one contact surface (8) of the connection element (3), and the solder material (4) has at least one recess (6) with a flux (7),
b) the connection element (3) is disposed over the solder material (4) on a portion of an electrically conductive structure (2) on a substrate (1), wherein the solder material (4) is shaped as a platelet and has two sides (10, 11) opposite each other, wherein the solder material (4) is connected to the contact surface (8) of the connection element (3) via one of the two contact sides (10) and wherein the solder material (4) is brought into contact with the electrically conductive structure on the substrate via the other contact side (11), and
c) the connection element (3) is connected to the electrically conductive structure (2) by means of the solder material (4) under input of heat,
wherein in process step (a) the solder material (4) is first formed with at least one recess (6), the flux (7) is then disposed at least in the recess (6), and the solder material (4) is then disposed on the contact surface (8) of the connection element (3), or
wherein in process step (a) the solder material (4) is first formed, the solder material (4) is then disposed on the contact surface (8) of the connection element (3), at least one recess (6) is then introduced into the surface of the solder material (4) facing away from the contact surface (8), and the flux (7) is then disposed at least in the recess (6).

2. Method according to claim 1, wherein the portion (12) of the contact side (11), via which the recess (6) is introduced into the solder material (4), is shaped as a rectangle, as an oval, as an ellipse, as a circle, or combinations thereof.

3. Method according to one of claims 1 through 2, wherein the flux (7) is applied as a solution on the solder material (4), and the solution of the flux (7) contains at least 50 wt.-% to 95 wt.-% solvent, preferably alcohol, particularly preferably propan-2-ol or ethanol, 0 wt.-% to 30 wt.-% colophonium, 0 wt.-% to 5 wt.-% dicarboxylic acids, 0 wt.-% to 8 wt.-% terpenes, preferably orange terpenes, and 0 wt.-% to 7 wt.-% solvent naphtha.

4. An electrical connection element (3) with at least one contact surface (8), wherein
i. solder material (4) is disposed on the contact surface (8),
ii. at least one recess (6) is disposed in the solder material (4), and
iii. a flux (7) is disposed at least in the recess (6), wherein the recess is introduced into the solder material on its surface,
wherein the solder material (4) is shaped as a platelet and has two sides (10, 11) opposite each other, wherein the solder material (4) is connected to the contact surface (8) of the connection element (3) via one of the two contact sides (10) and wherein the solder material (4) is brought into contact with the electrically conductive structure on the substrate via the other contact side (11).

5. Connection element according to claim 4, wherein the connection element (3) contains at least an iron-nickel alloy, an iron-nickel-cobalt alloy, or an iron-chromium alloy.

6. Connection element according to claim 5, wherein the connection element (3) contains at least 50 wt.-% to 75 wt.-% iron, 25 wt.-% to 50 wt.-% nickel, 0 wt.-% to 20 wt.-% cobalt, 0 wt.-% to 1.5 wt.-% magnesium, 0 wt.-% to 1 wt.-% silicon, 0 wt.-% to 1 wt.-% carbon, or 0 wt.-% to 1 wt.-% manganese.

7. Connection element according to claim 5, wherein the connection element (3) contains at least 50 wt.-% to 89.5 wt.-% iron, 10.5 wt.-% to 20 wt.-% chromium, 0 wt.-% to 1 wt.-% carbon, 0 wt.-% to 5 wt.-% nickel, 0 wt.-% to 2 wt.-% manganese, 0 wt.-% to 2.5 wt.-% molybdenum, or 0 wt.-% to 1 wt.-% titanium.

8. Connection element according to one of claims 4 through 7, wherein the solder material (4) contains tin and bismuth, indium, zinc, copper, silver, or compositions thereof, and the proportion of tin in the solder composition (4) is preferably 3 wt.-% to 99.5 wt.-%, and the proportion of bismuth, indium, zinc, copper, silver, or compositions thereof is preferably 0.5 wt.-% to 97 wt.-%.

9. Connection element according to one of claims 4 through 8, wherein the connection element (3) is coated with nickel, tin, copper, and / or silver, preferably with 0.1 µm to 0.3 µm nickel and / or 3 µm to 20 µm silver.

10. Connection element according to one of claims 4 through 9, wherein the proportion of flux in the totality of solder material and flux is from 0.1 wt.-% to 5 wt.-%, preferably from 0.3 wt.-% to 4 wt.-%, and particularly preferably from 0.5 wt.-% to 3 wt.-%.

11. Connection element according to one of claims 4 through 10, wherein the recess (6) is partially or completely filled with the flux (7).

12. Connection element according to one of claims 4 through 11, wherein a flux (7) is disposed in at least one indentation (16,20) in the region of the contact surface (8) of the connection element (3).

13. Use of a connection element (3) according to one of claims 4 through 12 for contacting electrically conductive structures, preferably heating conductors and/or antenna conductors, on a pane in means of transportation for travel on land, in the air, or on water, in particular in motor vehicles, in buildings, in functional and/or decorative individual pieces.

## Revendications

1. Procédé de fabrication d'une vitre avec au moins un élément de connexion électrique (3), dans lequel
a) du matériau de soudure (4) est appliqué sur au moins une surface de contact (8) de l'élément de connexion (3), et le matériau de soudure (4) présente au moins un évidement (6) avec un flux (7),
b) l'élément de connexion (3) est disposé sur le matériau de soudure(4) sur une partie d'une structure électriquement conductrice (2) sur un substrat (1), le matériau de soudure (4) étant en forme de plaquette et présentant deux faces (10, 11) opposées l'un à l'autre, le matériau de soudure (4) étant relié à la surface de contact (8) de l'élément de connexion (3) par l'une des deux faces de contact (10) et le matériau de soudure (4) étant mis en contact avec la structure électriquement conductrice sur le substrat par l'autre face de contact (11), et
c) l'élément de connexion (3) est relié à la structure électriquement conductrice (2) au moyen du matériau de soudure (4) sous apport de chaleur,
dans lequel, dans l'étape de procédé (a), le matériau de soudure (4) est d'abord formé avec au moins un évidement (6), le flux (7) est ensuite disposé au moins dans l'évidement (6), et le matériau de soudure (4) est ensuite disposé sur la surface de contact (8) de l'élément de connexion (3), ou
dans lequel, dans l'étape de procédé (a), le matériau de soudure (4) est d'abord formé, le matériau de soudure (4) est ensuite disposé sur la surface de contact (8) de l'élément de connexion (3), au moins un évidement (6) est ensuite introduit dans la surface du matériau de soudure (4) opposée à la surface de contact (8), et le flux (7) est ensuite disposé au moins dans l'évidement (6).

2. Procédé selon la revendication 1, dans lequel la partie (12) de la face de contact (11), par laquelle l'évidement (6) est introduit dans le matériau de soudure (4), a la forme d'un rectangle, d'un ovale, d'une ellipse, d'un cercle ou de combinaisons de ceux-ci.

3. Procédé selon l'une des revendications 1 à 2, dans lequel le flux (7) est appliqué sous forme de solution sur le matériau de soudure (4), et la solution du flux (7) contient au moins 50 % en poids à 95 % en poids de solvant, de préférence un alcool, en particulier de préférence du propane-2-ol ou de l'éthanol, 0 % en poids à 30 % en poids de colophonium, 0 % en poids à 5 % en poids d'acides dicarboxyliques,
0 % à 8 % en poids de terpènes, de préférence des terpènes oranges, et 0 % à 7 % en poids de naphte solvant.

4. Elément de connexion électrique (3) avec au moins une surface de contact (8), dans lequel
i. le matériau de soudure (4) est disposé sur la surface de contact (8),
ii. au moins un évidement (6) est disposé dans le matériau de soudure (4), et
iii. un flux (7) est disposé au moins dans l'évidement (6), dans lequel l'évidement est introduit dans le matériau de soudure à sa surface,
dans lequel le matériau de soudure (4) est en forme de plaquette et présente deux faces (10, 11) opposées l'une à l'autre, dans lequel le matériau de soudure (4) est relié à la surface de contact (8) de l'élément de connexion (3) par l'une des deux faces de contact (10) et dans lequel le matériau de soudure (4) est mis en contact avec la structure électriquement conductrice sur le substrat par l'autre face de contact (11).

5. Elément de connexion selon la revendication 4, dans lequel l'élément de connexion (3) contient au moins un alliage fer-nickel, un alliage fer-nickel-cobalt ou un alliage fer-chrome.

6. Elément de connexion selon la revendication 5, dans lequel l'élément de connexion (3) contenant au moins 50 % en poids à 75 % en poids de fer, 25 % en poids à 50 % en poids de nickel, 0 % en poids à 20 % en poids de cobalt, 0 % en poids à 1,5 % en poids de magnésium, 0 % en poids à 1 % en poids de silicium, 0 % en poids à 1 % en poids de carbone ou 0 % en poids à 1 % en poids de manganèse.

7. Elément de liaison selon la revendication 5, l'élément de liaison (3) contenant au moins 50 % en poids à 89,5 % en poids de fer, 10,5 % en poids à 20 % en poids de chrome, 0 % en poids à 1 % en poids de carbone, 0 % à 5 % en poids de nickel, 0 % à 2 % en poids de manganèse, 0 % à 2,5 % en poids de molybdène ou 0 % à 1 % en poids de titane.

8. Elément de connexion selon l'une des revendications 4 à 7, dans lequel le matériau de soudure (4) contient de l'étain et du bismuth, de l'indium, du zinc, du cuivre, de l'argent ou des compositions de ceux-ci, et la proportion d'étain dans la composition de soudure (4) est de préférence de 3 % en poids à 99,5 % en poids, et la proportion de bismuth, d'indium, de zinc, de cuivre, d'argent ou de compositions de ceux-ci est de préférence de 0,5 % en poids à 97 % en poids.

9. Elément de connexion selon l'une des revendications 4 à 8 dans lequel l'élément de connexion (3) est revêtu de nickel, d'étain, de cuivre et/ou d'argent, de préférence de 0,1 µm à 0,3 µm de nickel et/ou de 3 µm à 20 µm d'argent.

10. Elément de connexion selon l'une des revendications 4 à 9, dans lequel la proportion de flux dans la totalité du matériau de soudure et du flux est de 0,1 % en poids à 5 % en poids, de préférence de 0,3 % en poids à 4 % en poids, et particulièrement de préférence de 0,5 % en poids à 3 % en poids.

11. Elément de connexion selon l'une des revendications 4 à 10, dans lequel l'évidement (6) est partiellement ou complètement rempli de flux (7).

12. Elément de connexion selon l'une des revendications 4 à 11, dans lequel un flux (7) est disposé dans au moins un creux (16, 20) dans la zone de la surface de contact (8) de l'élément de connexion (3).

13. Utilisation d'un élément de connexion (3) selon l'une des revendications 4 à 12 pour la mise en contact de structures électriquement conductrices, de préférence de conducteurs chauffants et/ou de conducteurs d'antenne, sur une vitre dans des moyens de transport pour les déplacements sur terre, dans l'air ou sur l'eau, en particulier dans des véhicules automobiles, dans des bâtiments, dans des pièces individuelles fonctionnelles et/ou décoratives.
